(19) Europäisches Patentamt
European Patent Office
Office européen des brevets

(11) **EP 4 191 285 A1**

(12) **EUROPEAN PATENT APPLICATION**
published in accordance with Art. 153(4) EPC

(43) Date of publication:
**07.06.2023 Bulletin 2023/23**

(21) Application number: **21850595.6**

(22) Date of filing: **29.07.2021**

(51) International Patent Classification (IPC):
*G01S 17/89* (2020.01)     *H04N 5/225* (2006.01)
*G01S 7/51* (2006.01)

(52) Cooperative Patent Classification (CPC):
**G01S 7/51; G01S 17/89; H04N 23/00**

(86) International application number:
**PCT/KR2021/009913**

(87) International publication number:
**WO 2022/025677 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.07.2020 KR 20200094694**

(71) Applicant: **LG Innotek Co., Ltd.**
**Seoul 07796 (KR)**

(72) Inventors:
• **PARK, Gwui Youn**
**Seoul 07796 (KR)**
• **LEE, Jae Hoon**
**Seoul 07796 (KR)**
• **HAN, Sang Heon**
**Seoul 07796 (KR)**

(74) Representative: **DREISS Patentanwälte PartG
mbB**
**Friedrichstraße 6**
**70174 Stuttgart (DE)**

(54) **DISTANCE MEASURING CAMERA**

(57)     A distance measuring camera disclosed to an embodiment includes an image sensor, a light source, a first lens portion including a plurality of lenses disposed on the light source, and a driving member for moving the light source or the first lens portion in at least one direction of first and second directions perpendicular to an optical axis of the first lens portion, wherein output light emitted from the light source passes through the first lens portion and form a field of illumination (FOI) region including a plurality of dot patterns arranged in two-dimension in a region spaced apart from the first lens portion, wherein the driving member controls a position of the FOI region to be located in first or second region, wherein when the driving member moves the position of the FOI region from the first region to the second region, a first dot pattern located at one end of the plurality of dot patterns is moved outward relative to the first region than a second dot pattern located at the other end of the plurality of dot patterns.

FIG. 2

**Description**

[Technical Field]

The embodiment relates to a distance measuring camera.

[Background Art]

The camera module performs a function of photographing an object and storing it as an image or video and is installed in various applications. In particular, the camera module is manufactured in a small size and is applied to portable devices such as smartphones, tablet PCs, and laptops, as well as drones and vehicles, providing various functions.

Recently, demand and supply for 3D content is increasing. Accordingly, various technologies for grasping 3D content by grasping depth information using a camera are being researched and developed. For example, technologies capable of determining depth information include a technology using a stereo camera, a technology using a structured light camera, a technology using a depth from defocus (DFD) camera, and a technology using a camera module of a time of flight (TOF) and the like.

First, a technique using a stereo camera is a technology that generates depth information by using a difference in distance, interval, etc. generated from left and right parallax of images received through a plurality of cameras, for example, each of the cameras disposed on the left and right sides. In addition, the technology using a structured light camera is a technology that generates depth information using light sources arranged to form a set pattern, and a technique using a Depth from Defocus (DFD) camera is a technique using defocusing and generating depth information using a plurality of images with different focal points captured in the same scene. Also, a time of flight (TOF) camera is a technique for generating depth information by calculating a distance to a target by measuring the time when light emitted from a light source toward an object is reflected by the target and returned to the sensor. These TOF cameras have the advantage of acquiring depth information in real time, and have recently attracted attention.

However, the TOF camera has a safety problem because it uses light of a relatively high wavelength band. In detail, light used in the TOF camera generally uses light in an infrared wavelength band, and when the light is incident on a sensitive part of a person, such as the eye or skin, there is a problem in that it may cause various injuries and diseases. In addition, as the distance between the TOF camera and the object increases, light energy per area reaching the object decreases, and thus light energy reflected from the object and returned may also decrease. Accordingly, there is a problem in that accuracy of depth information of an object is reduced. Also, as described above, when an object is located far away, stronger light may be emitted towards the object in order to improve accuracy of depth information of the object. However, in this case, an issue related to an increase in power consumption of the camera and a problem regarding safety may be caused. Also, the light source of the TOF camera may include a plurality of emitters. At this time, the light emitted from the plurality of emitters is provided to the object regardless of the size, shape, and distance of the object. Accordingly, there is a problem in that the total power consumption of the camera is increased by radiating light to an unnecessary region where the object is not located. Therefore, a new camera capable of solving the above problems is required.

[Disclosure]

[Technical Problem]

An embodiment provides a distance measuring camera capable of improving the accuracy of depth information on an object. In addition, an embodiment provides a ranging camera with improved spatial resolution. In addition, an embodiment provides a distance measuring camera capable of improving power consumption efficiency.

[Technical Solution]

A distance measuring camera according to an embodiment comprises an image sensor, a light source, a first lens portion including a plurality of lenses disposed on the light source, and a driving member for moving the light source or the first lens portion in at least one of a first direction and a second direction perpendicular to an optical axis of the first lens portion, and output light emitted from the light source passes through the first lens portion and forms a field of illumination (FOI) region including a plurality of dot patterns arranged two-dimensionally in a region spaced apart from the first lens portion, and the driving member controls a location of the FOI region to be located in a first region or a second region, and when the driving member moves the location of the FOI region from the first region to the second region, a first dot pattern located at one end of the plurality of dot patterns may be moved to an outside of the first region than a second dot pattern located at the other end of the plurality of dot patterns.

In addition, a distance between the second dot pattern moved to the second region and the first dot pattern in the first region before moving may be smaller than a distance between the first dot pattern and the second dot pattern disposed in the FOI region located in the first or second region.

In addition, the second region includes a plurality of sub-regions, and when the first lens portion to which no driving force is applied is moved by the driving member, the FOI region may move from the first region defined as an initial position to one selected sub-region among the plurality of sub-regions of the second region.

Further, the plurality of sub-regions of the second region may include a 2-1 region, a 2-2 region spaced apart from the 2-1 region in the first direction, a 2-3 region spaced apart from the 2-2 region in the second direction, and a 2-4 region spaced apart from the 2-2 region in the second direction and spaced apart from the 2-3 region in the first direction, wherein each of the 2-1 region to 2-4 region may be located at a third direction perpendicular to the optical axis with respect to the first region and diagonal to the first and second directions.

Also, the first region may partially overlap the 2-1 to 2-4 regions based on the optical axis direction. Also, the 2-1 to 2-4 regions may not overlap each other based on the optical axis direction. In addition, the 2-1 and 2-3 regions and the 2-2 and 2-4 regions partially overlap each other based on the optical axis direction, the 2-1 and 2-2 regions, and the 2-3 and 2-4 regions may not overlap each other based on the optical axis direction.

In addition, when the driving force of the driving member is not applied, a FOI angle of output light emitted from the light source may satisfy Equation 1 below.

[Equation 1]

$$FOI = 2 \times \tan^{-1} \frac{\dfrac{D}{2}}{EFL}$$

(In Equation 1, FOI may mean the total field of illumination (FOI) angle of the output light in an initial state in which the driving force of the driving member is not applied, and D may mean the diagonal length of the effective region of the light source.) In addition to, the FOI angle of the output light may be 60 degrees or less. Also, when the first lens portion moves in the first direction, a movement distance of the first lens portion in the first direction may satisfy Equation 2 below.

[Equation 2]

$$S1 < (\tan 50^{\circ} \times EFL) - \frac{dx}{2}$$

(In Equation 2, S 1 means a moving distance of the first lens portion moving in the first direction with respect to the optical axis, and EFL means an effective focal length of the first lens portion. In addition, dx means the length in the first direction.)

Also, when the first lens portion moves in the second direction, a movement distance of the first lens portion in the second direction may satisfy Equation 3 below.

[Equation 3]

$$S2 < (\tan 50^\circ \times EFL) - \frac{dy}{2}$$

(In Equation 3, S2 means a movement distance of the first lens portion moving in the second direction with respect to the optical axis, and EFL means an effective focal length of the first lens portion. In addition, dx means the length in the first direction.)

Also, when the first lens portion moves in at least one of the first and second directions, a total field of illumination (FOI) angle of output light emitted from the light source may satisfy Equation 4 below.

[Equation 4]

$$FOI_s = 2 \times \tan^{-1} \sqrt{(\tan\frac{FOI_X}{2})^2 + (\tan\frac{FOI_Y}{2})^2}$$

(In Equation 4, FOIs means the total FOI angle of the distance measuring camera changed by the movement of the first lens portion. Also, FOIx means the FOI angle in the first direction, and $FOI_Y$ means the FOI angle in the second direction.)

[Advantageous Effects]

A distance measuring camera according to an embodiment may effectively grasp depth information of an object and may have improved spatial resolution. In detail, the embodiment may control the position of the FOI region formed by the output light by controlling the position of at least one of the first lens portion and the light source. Accordingly, the distance measuring camera according to the embodiment may provide output light having a wider FOI angle and a wider area of the FOI region. The distance measuring camera according to the embodiment may control the FOI angle of the output light and the area of the FOI region by using a light emitting device having a relatively small size, a light emitting device including a relatively small number of emitters, or a light source having a relatively small FOI angle. Accordingly, the distance measuring camera may have improved power consumption characteristics. The distance measuring camera according to the embodiment may provide optimal light to the object in consideration of the size and shape of the object located in the front, the distance to the object, whether the object is moving, and the like. Accordingly, the distance measuring camera may track and obtain depth information of an object, and may have improved spatial resolution characteristics.

[Description of Drawings]

FIG. 1 is a configuration diagram of a distance measuring camera according to an embodiment.
FIG. 2 is a configuration diagram of a light emitting portion and a light receiving portion in a distance measuring camera according to an embodiment.
FIG. 3 is a diagram for explaining an optical signal generated by a light emitting portion in a distance measuring camera.
FIG. 4 is a diagram for explaining a light pattern of a distance measuring camera according to an embodiment.
FIG. 5 is a view showing the arrangement of light emitting portions in a distance measuring camera according to an embodiment.
FIG. 6 is a view illustrating movement of a first lens portion in the distance measuring camera according to FIG. 5.
FIG. 7 is another view illustrating the arrangement of light emitting portions in a distance measuring camera according to an exemplary embodiment.
FIG. 8 is a diagram illustrating movement of a light source in the distance measuring camera according to FIG. 7.
FIGs. 9 to 14 are views for explaining a FOI region formed at a distance of n meters by output light emitted from a light emitting portion.

FIGs. 15 to 17 are views for explaining a FOI angle in a distance measuring camera according to an embodiment.

FIGs. 18 to 20 are views for explaining FOI regions formed according to various modes.

FIGs. 21 and 22 are perspective views of a mobile terminal and a vehicle to which a distance measuring camera according to an embodiment is applied.

[Best Mode]

Hereinafter, preferred embodiments of the invention will be described in detail with reference to the accompanying drawings. The technical spirit of the invention is not limited to some embodiments to be described, and may be implemented in various other forms, and one or more of the components may be selectively combined and substituted for use within the scope of the technical spirit of the invention. In addition, the terms (including technical and scientific terms) used in the embodiments of the invention, unless specifically defined and described explicitly, may be interpreted in a meaning that may be generally understood by those having ordinary skill in the art to which the invention pertains, and terms that are commonly used such as terms defined in a dictionary should be able to interpret their meanings in consideration of the contextual meaning of the relevant technology. Further, the terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element.

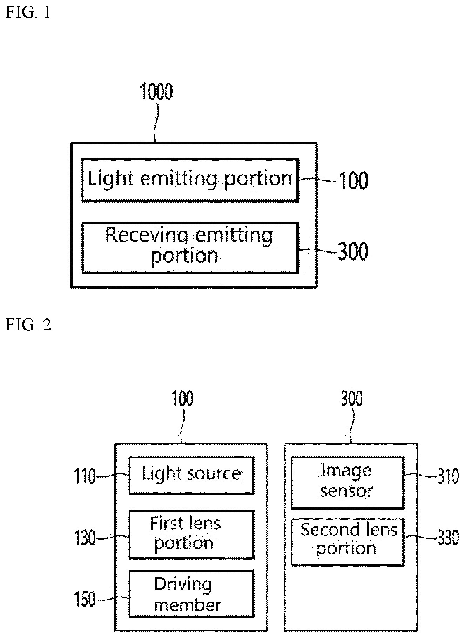

FIG. 1 is a configuration diagram of a distance measuring camera according to an embodiment.

Referring to FIG. 1, a distance measuring camera 1000 according to an embodiment may include a light emitting portion 100 and a light receiving portion 300.

The light emitting portion 100 may emit light. The light emitting portion 100 may emit light having a set intensity in a set direction. The light emitting portion 100 may emit light in a visible light to infrared wavelength band. The light emitting portion 100 may form an optical signal. The light emitting portion 100 may form an optical signal set by a signal applied from a control portion (not shown). The light emitting portion 100 may generate and output an output light signal in the form of a pulse wave or a continuous wave according to an applied signal. Here, the continuous wave may be in the form of a sinusoid wave or a squared wave. Also, the optical signal may refer to an optical signal incident on an object. The light signal output by the light emitting portion 100 may be an output light signal or an output light signal based on the distance measuring camera 1000, and the light output by the light emitting portion 100 may be an incident light or an incident light signal based on the object.

The light emitting portion 100 may radiate the light signal to the object for a predetermined exposure period (integration time). Here, the exposure period may mean one frame period. For example, when the frame rate of the distance measuring camera 1000 is 30 frame per second (FPS), the period of one frame may be 1/30 second.

The light emitting portion 100 may output a plurality of optical signals having the same frequency. In addition, the light emitting portion 100 may output a plurality of optical signals having different frequencies. For example, the light emitting portion 100 may repeatedly output a plurality of optical signals having different frequencies according to a set rule. In addition, the light emitting portion 100 may simultaneously output a plurality of optical signals having different frequencies.

The light receiving portion 300 may be disposed adjacent to the light emitting portion 100. For example, the light receiving portion 300 may be arranged side by side with the light emitting portion 100. The light receiving portion 300 may receive light. The light receiving portion 300 may detect light reflected by the object, for example, input light. In detail, the light receiving portion 300 may detect light emitted from the light emitting portion 100 and reflected on the object. The light receiving portion 300 may detect light of a wavelength band corresponding to the light emitted by the light emitting portion 100.

The distance measuring camera 1000 may further include a controller (not shown). The control portion may be connected to at least one of the light emitting portion 100 and the light receiving portion 300. The control portion may control driving of at least one of the light emitting portion 100 and the light receiving portion 300. For example, the control portion may include a first control portion (not shown) that controls the light emitting portion 100. The first control portion may control an optical signal applied to the light emitting portion 100. The first control portion may control the strength and frequency pattern of the optical signal.

In addition, the control portion may further include a second control portion (not shown) for controlling the light emitting portion 100. In detail, the second control portion may control at least one of the first lens portion 130 and the light source 110 of the light emitting portion 100. For example, the second control portion may control a driving signal supplied to the driving member 150. Also, the second control portion may control a driving signal supplied to the light source 110.

The control portion may control the driving of the light emitting portion 100 according to the size, position, shape, etc. of an object located in front of the distance measuring camera 1000. For example, the control portion may control the intensity of emitted light, the size of the light pattern, and the shape of the light pattern according to the position of the object.

The distance measuring camera 1000 may be a time of flight (TOF) camera that emits light toward an object and calculates depth information of the object based on a time or phase difference of light reflected from the object and returned.

Also, although not shown in the drawings, the distance measuring camera 1000 may further include a coupling portion (not shown) and a connection portion (not shown).

The coupling portion may be connected to an optical device to be described later. The coupling portion may include a circuit board and terminals disposed on the circuit board. For example, the terminal may be a connector for physical and electrical connection with the optical device.

The connection portion may be disposed between a substrate of the distance measuring camera 1000 and the coupling portion, which will be described later. The connection portion may connect the substrate and the coupling portion. For example, the connection portion may include a flexible PCB (FPCB), and may electrically connect the substrate and the circuit board of the coupling portion. Here, the substrate may be at least one of a first substrate of the light emitting portion 100 and a second substrate of the light receiving portion 300.

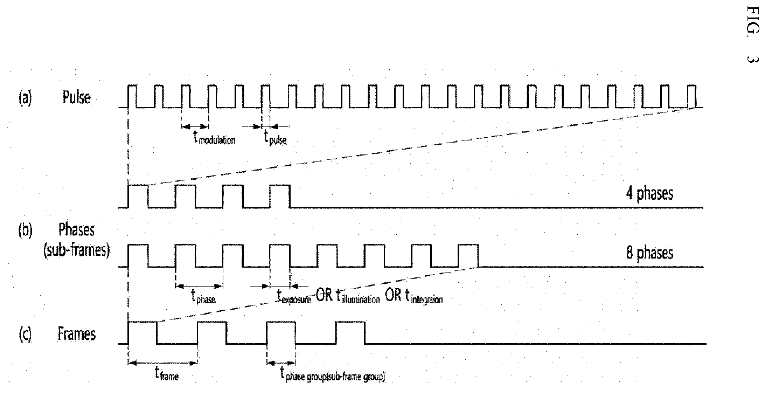

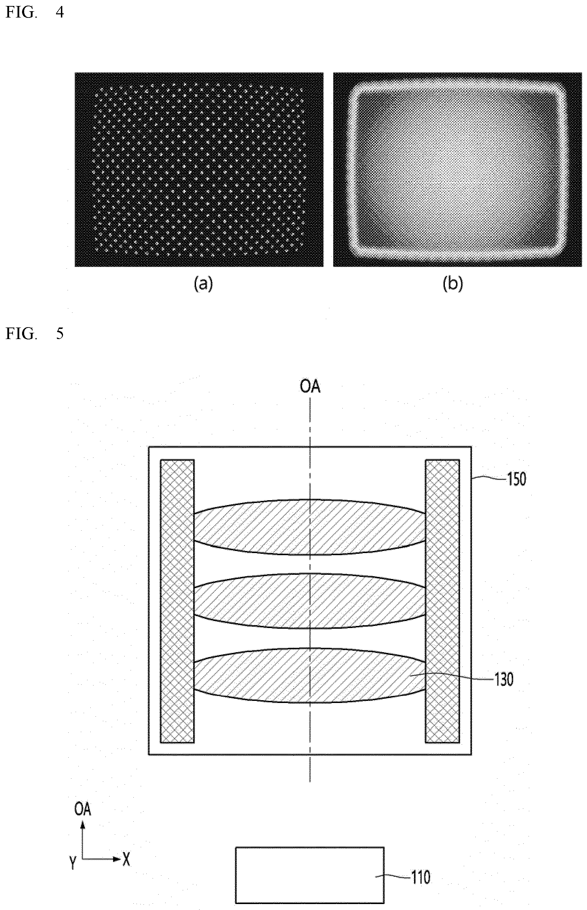

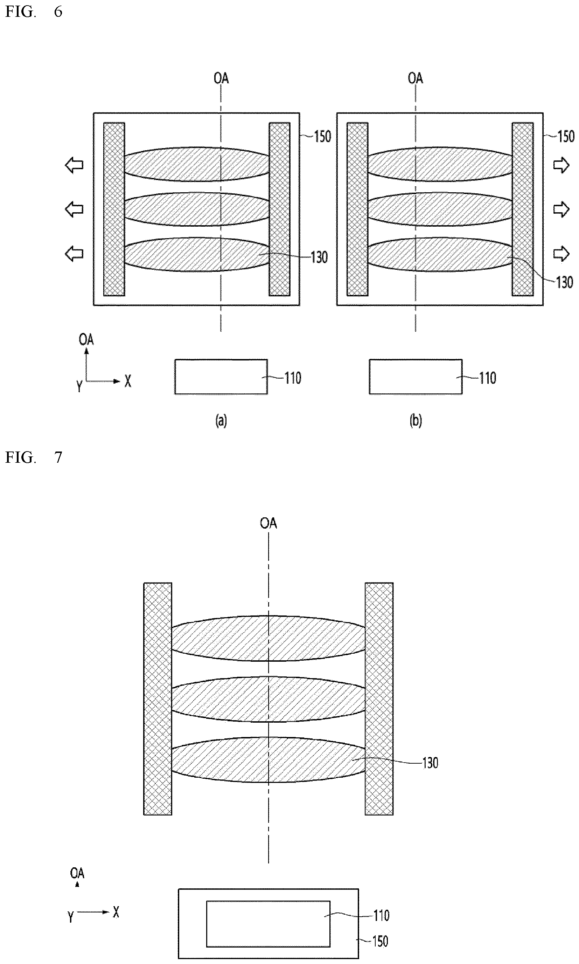

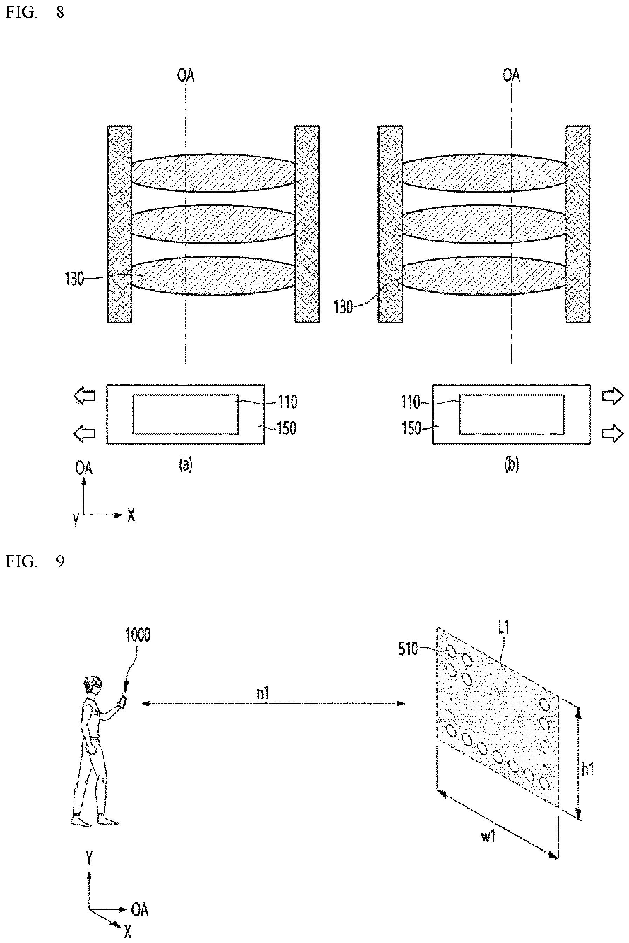

FIG. 2 is a configuration diagram of a light emitting portion and a light receiving portion in the distance measuring camera according to an embodiment, FIG. 3 is a diagram for explaining an optical signal generated by the light emitting portion in the distance measuring camera according to an embodiment, and FIG. 4 is a diagram for explaining the light pattern of the distance measuring camera according to the embodiment. In addition to, FIG. 5 is a view showing the arrangement of light emitting portions in the distance measuring camera according to the embodiment, and FIG. 6 is a view showing movement of the first lens portion in the distance measuring camera according to FIG. 5. In addition, FIG. 7 is another view showing the arrangement of light emitting portions in the distance measuring camera according to the embodiment, and FIG. 8 is a view showing the movement of the light source in the distance measuring camera according to FIG. 7.

The light emitting portion 100 and the light receiving portion 300 according to the embodiment will be described in more detail with reference to FIGs. 2 to 8.

First, referring to FIGs. 2 to 4, the light emitting portion 100 may include a light source 110, a first lens portion 130 and a driving member 150.

The light emitting portion 100 may be disposed on a first substrate (not shown). The first substrate may support the light emitting portion 100. The first substrate may be electrically connected to the light emitting portion 100. The first substrate may be a circuit board. The first substrate may include a wiring layer for supplying power to the light emitting portion 100 and may be a printed circuit board (PCB) formed of a plurality of resin layers. For example, the first substrate may include at least one of a rigid PCB, a metal core PCB (MCPCB), a flexible PCB (FPCB), and a rigid flexible PCB (RFPCB).

In addition, the first substrate may include synthetic resin including glass, resin, epoxy, and the like, and may include ceramic having excellent thermal conductivity or a metal having an insulated surface. The first substrate may have a shape such as a plate or a lead frame, but is not limited thereto. In addition, although not shown in the drawing, a Zener diode, a voltage regulator, and a resistor may be further disposed on the first substrate, but is not limited thereto.

An insulating layer (not shown) or a protective layer (not shown) may be disposed on the first substrate. The insulating layer or the protective layer may be disposed on at least one of one surface and the other surface of the first substrate.

The light source 110 may be disposed on the first substrate. The light source 110 may directly contact the upper surface of the first substrate and be electrically connected to the first substrate.

The light source 110 may include a light emitting device. For example, the light source 110 may include at least one light emitting device of a Light Emitting Diode (LED), a Vertical Cavity Surface Emitting Laser (VCSEL) including an emitter for emitting light, or an Organic Light Emitting Diode (OLED), and laser diode (LD).

The light source 110 may emit light in a set wavelength band. In detail, the light source 110 may emit visible light or infrared light. For example, the light source 110 may emit visible light in a wavelength range of about 380 nm to about 700 nm. In addition, the light source 110 may emit infrared light in a wavelength range of about 700 nm to about 1 mm.

The light source 110 may include one or a plurality of light emitting devices. For example, when the light source 110 includes one light emitting device, the one light emitting device may include a plurality of apertures for emitting light, and the plurality of apertures may be disposed according to a predetermined rule. In addition, when the light source 110 includes a plurality of light emitting devices, the plurality of light emitting devices may be disposed on the first substrate according to a set pattern. Further, each of the plurality of light emitting devices includes a plurality of apertures for light emission, and the plurality of apertures may be arranged according to a predetermined rule.

Also, the light source 110 may include a plurality of channels for individually controlling a plurality of apertures. Accordingly, the light source 110 may selectively drive a plurality of apertures.

Also, the light source 110 may form a set optical signal.

For example, referring to FIG. 3(a), the light source 110 may generate light pulses at regular intervals. The light source 110 may generate light pulses having a predetermined pulse width ($t_{pulse}$) with a predetermined pulse repetition period ($t_{modulation}$).

Also, referring to FIG. 3(b), the light source 110 may generate one phase pulse by grouping a predetermined number of light pulses. The light source 110 may generate a phase pulse having a predetermined phase pulse period ($t_{phase}$) and a predetermined phase pulse width ($t_{exposure}$, $t_{illumination}$, $t_{integration}$). Here, one phase pulse period ($t_{phase}$) may correspond to one sub-frame. A sub-frame may be referred to as a phase frame. Phase pulse periods may be grouped into a predetermined number. A method of grouping four phase pulse periods ($t_{phase}$) may be referred to as a 4-phase method. Grouping 8 cycles ($t_{phase}$) may be referred to as an 8-phase method.

Also, referring to FIG. 3(c), the light source 110 may generate one frame pulse by grouping a certain number of phase pulses. The light source 110 may generate frame pulses having a predetermined frame pulse period ($t_{frame}$) and a predetermined frame pulse width ($t_{phase\ group\ (sub-frame\ group)}$). Here, one frame pulse period ($t_{frame}$) may correspond to one frame. Accordingly, when an object is photographed at 10 FPS, 10 frame pulse cycles ($t_{frame}$) may be repeated per second. In the 4-phase method, one frame may include 4 sub-frames. That is, one frame may be generated through 4 sub-frames. In the 8-phase method, one frame may include 8 sub-frames. That is, one frame may be generated through 8 sub-frames. For the above description, terms of light pulse, phase pulse, and frame pulse were used, but are not limited thereto.

A first lens portion 130 may be disposed on the light source 110. The first lens portion 130 may include a plurality of lenses spaced apart from the light source 110 and a housing accommodating the lenses. For example, the first lens portion 130 may include three lenses. The lens may include at least one of glass and plastic. The first lens portion 130 may control a path of light emitted from the light source 110. For example, the first lens portion 130 may diffuse, scatter, refract, or condense the light emitted from the light source 110.

The plurality of lenses of the first lens portion 130 may include a collimator lens. The collimator lens may collimate the light output from the light source 110. Here, collimating may mean reducing a divergence angle of light, and ideally may mean making the light propagate in parallel without converging or diverging. That is, the collimator lens may condense the light emitted from the light source 110 into parallel light.

The first lens portion 130 may be disposed on an emission path of light emitted from the light source 110. In detail, the collimator lens may be disposed on an emission path of light emitted from the light source 110. The center of the collimator lens may overlap the optical axis OA of the light source 110.

The first lens portion 130 may have a set distance from the light source 110. In detail, the collimator lens may have a set distance from the light source 110. For example, a focal point of the first lens portion 130, for example, the collimator lens, may be disposed on the light source 110 to provide light in a dot pattern, and the focal point may be disposed on the light source 110 to provide light of a planar pattern.

The first lens portion 130 may form output light having a set field of illumination (FOI) angle. For example, light emitted from the light source 110 may pass through the first lens portion 130 and have a set FOI angle. In detail, the first lens portion 130 may change the path of the parallel light passing through the collimator lens so that the output light has a set angle of view. For example, the divergence angle of the light source 110 may be greater than or equal to about 15 degrees and less than or equal to about 30 degrees. Also, the FOI angle of the output light may be about 60 degrees or less. In detail, the FOI angle of the output light may be about 55 degrees or less. In more detail, the FOI angle of the output light may be about 50 degrees or less. That is, the output light may have a relatively small FOI angle. For example, when the FOI angle is relatively large, for example, exceeding 60 degrees, the effect of increasing the total FOI angle and the area of the FOI region by moving the formed FOI region may be insignificant. However, as the embodiment has a relatively small FOI angle as described above, it is possible to effectively increase the total FOI angle and the area of the formed FOI region.

The first lens portion 130 may have a set effective focal length (EFL). In detail, the collimator lens may have a fixed EFL. The EFL of the first lens portion 130 may be about 340 $\mu$m to about 1050 $\mu$m.

Also, the first lens portion 130 may have a back focal length (BFL). Here, the BFL may mean a distance in the optical axis direction from the light source 110 side of the last lens of the first lens portion 130 closest to the light source 110 to the back focal point. For example, when the light source 110 is disposed at the back focal point, the BFL may be distance from a light side surface of the collimator lens facing the light source 110 to an upper surface of the light source 110. The BFL may be greater than the EFL.

The first lens portion 130 may prevent the light emitted from the light source 110 from being directly irradiated onto an object. For example, the first lens portion 130 may control the light emitted from the light source 110 to prevent direct irradiation of light to light-sensitive regions such as human eyes and skin.

Also, the first lens portion 130 may improve uniformity of light emitted from the light source 110. For example, the first lens portion 130 may prevent a hot spot in which light is concentrated in a region corresponding to a plurality of emitters of the light source 110 from being formed. In addition, the first lens portion 130 may receive the light emitted from the light source 110 and transform it into various shapes. For example, the first lens portion 130 may transform the light emitted from the light source 110 into various cross-sectional shapes such as circular, elliptical, and polygonal shapes.

In detail, the first lens portion 130 may receive the light emitted from the light source 110 and transform it into a point light source having a plurality of dot patterns as shown in FIG. 4(a). For example, the light emitted from the light emitting portion 100 may form a FOI region having a predetermined area in a region spaced apart from the first lens portion 130 by n meters. The plurality of dot patterns may be disposed within the FOI region. In this case, the plurality of dot patterns may have a predetermined size in the region spaced apart by n meters and may be spaced apart from each other at predetermined intervals.

In addition, the first lens portion 130 may receive the light emitted from the light source 110 and transform it into a planar light source as shown in FIG. 4(b). For example, the light emitted from the light emitting portion 100 may form a FOI having a predetermined area in a plane shape in a region spaced apart from the first lens portion 130 by n meters.

The driving member 150 may be connected to at least one of the light source 110 and the first lens portion 130. The driving member 150 may include at least one actuator. For example, the driving member 150 may include at least one of a Voice Coil Motor (VCM), a piezo-electric device, a shape memory alloy, and a MEMS device as an actuator.

The driving member 150 is connected to at least one of the light source 110 and the first lens portion 130, and may be moved at least one of the first lens portion 130 and the light source 110 using the driving force of the actuator. In detail, the driving member 150 may move the optical axis OA of the light source 110 passing through the first lens portion 130 from the center of the first lens portion 130.

The light receiving portion 300 may be arranged side by side with the light emitting portion 100. The light receiving portion 300 has a set field of view (FOV) and may detect light emitted from the light emitting portion 100 and reflected on an object. The light receiving portion 300 is disposed on a second substrate and may include an image sensor 310 and a second lens portion 330.

The second substrate may support the light receiving portion 300. The second substrate may be electrically connected to the light receiving portion 300. The second substrate may be a circuit board. The second substrate may include a wiring layer for supplying power to the light emitting portion 100 and may be a printed circuit board (PCB) formed of a plurality of resin layers. For example, the second substrate may include at least one of a rigid PCB, a metal core PCB (MCPCB), a flexible PCB (FPCB), and a rigid flexible PCB (RFPCB).

In addition, the second substrate may include synthetic resin including glass, resin, epoxy, and the like, and may include ceramic having excellent thermal conductivity or a metal having an insulated surface. The second substrate may have a shape such as a plate or a lead frame, but is not limited thereto. In addition, although not shown in the drawings, a Zener diode, a voltage regulator, and a resistor may be further disposed on the second substrate, but is not limited thereto.

An insulating layer (not shown) or a protective layer (not shown) may be disposed on the second substrate. The insulating layer or the protective layer may be disposed on at least one of one surface and the other surface of the second substrate.

The second substrate may be electrically connected to the first substrate. The second substrate may be separated from and spaced apart from the first substrate, or may be integrally formed, but is not limited thereto.

The image sensor 310 may be arranged side by side with the light source 110. The image sensor 310 may be disposed on the second substrate. The image sensor 310 may directly contact the upper surface of the second substrate and be electrically connected to the second substrate. The image sensor 310 may be electrically connected to the second substrate.

The image sensor 310 may detect light. The image sensor 310 may detect light reflected from an object and incident on the distance measuring camera 1000. In detail, the image sensor 310 may detect reflected light emitted from the light emitting portion 100 and reflected by the object. An optical axis of the image sensor 310 may be parallel to an optical axis OA of the light source 110.

The image sensor 310 has a length a (length in the x-axis direction) in a first direction and a length b (length in the y-axis direction) in a second direction, and may detect light having a wavelength corresponding to that emitted from the light source 110. For example, the image sensor 310 may include an infrared sensor capable of detecting infrared rays (IR) emitted from the light source 110. The image sensor 310 may detect light incident through a second lens portion 330 to be described later. The image sensor 310 may detect light emitted from the light source 110 and reflected on the object, and may detect depth information of the object using a time or phase difference.

The second lens portion 330 may be disposed on the image sensor 310. The second lens portion 330 is spaced apart from the image sensor 310 and may include at least one lens and a housing accommodating the lens. The lens may include at least one of glass and plastic.

The second lens portion 330 may be disposed on a light path incident to the light receiving portion 300. The second lens portion 330 may pass light emitted from the light source 110 and reflected on the object toward the image sensor 310. To this end, the optical axis of the second lens portion 330 may correspond to the optical axis of the image sensor 310.

Also, although not shown in the drawing, the light emitting portion 100 may include a first filter (not shown). The first filter may be disposed between the light source 110 and the first lens portion 130.

The first filter may pass light of a set wavelength band and filter light of a different wavelength band. In detail, the first filter may pass light of a set wavelength band among the lights emitted from the light source 110 and block light of a different wavelength band. In addition, the light receiving portion 300 may include a second filter (not shown). The second filter may be disposed between the object and the image sensor 310. For example, the second filter may be disposed between the image sensor 310 and the second lens portion 330. The second filter may pass light of a set wavelength band and filter light of a different wavelength band. In detail, the second filter may pass light having a wavelength corresponding to the light source 110 among light incident to the light receiving portion 300 through the second lens portion 330, and may block light of a different wavelength band from a wavelength of the light source 110.

Referring to FIGs. 5 and 6, the driving member 150 according to the embodiment may be connected to the first lens portion 130. For example, the driving member 150 may be disposed on the first lens portion 130 and coupled to the first lens portion 130. The driving member 150 may be coupled to the housing of the first lens portion 130. Also, the driving member 150 may be coupled to at least one lens of the first lens portion 130. In this case, the driving member 150 may be coupled to the collimator lens.

The driving member 150 may move the entirety of the first lens portion 130 or at least one lens included in the first lens portion 130 by using the driving force of the actuator. For example, the driving member 150 may move the entirety of the first lens portion 130 or the at least one lens in a direction perpendicular to the optical axis OA by a signal applied from the second controller. In detail, the driving member 150 may move the first lens portion 130 or the at least one lens in at least one direction of the first direction (x-axis direction) perpendicular to the optical axis OA and the second direction (y-axis direction) perpendicular to the first direction.

That is, the driving member 150 may control the position of the optical axis OA of the light source 110 passing through the first lens portion 130. For example, in an initial state in which the driving member 150 does not operate, the optical axis OA of the light source 110 may overlap the center of the first lens portion 130. Here, the initial position of the optical axis OA may be defined as an initial position.

Then, when the driving member 150 operates, the entirety of the first lens portion 130 or at least one lens of the first lens portion 130 may move, and the optical axis OA of the light passing the first lens portion 130 may be moved from the position of the initial optical axis OA. Accordingly, the path of the light emitted from the light source 110 may be changed.

For example, as shown in FIG. 6(a) or FIG. 6(b), the first lens portion 130 may be moved in a first direction (negative (-) first direction (FIG. 6 (a), a positive (+) first direction (FIG. 6 (b)) by the driving member 150 within in a set range. In this case, the optical axis OA may be moved in the first direction from a position of the initial optical axis OA, and the path of the light passing through the first lens portion 130 may move in the first direction.

In addition, although not shown in the drawings, the first lens portion 130 may be moved in a second direction (positive (+) second direction or negative (-) second direction) by the driving member 150 within a set range. In this case, the optical axis OA may move in the second direction from a position of the initial optical axis OA, and a path of light passing through the first lens portion 130 may move in the second direction. Also, although not shown in the drawing, the first lens portion 130 may be moved in first and second directions by the driving member 150 within a set range. In this case, the optical axis OA may move in the third direction (direction diagonal to the first and second directions) from the position of the initial optical axis OA, and the path of the light passing through the first lens portion 130 may move in the third direction. Accordingly, the path of light emitted from the light source 110 may pass through the first lens portion 130 and move in various directions such as the first direction, the second direction, and the third direction.

Also, referring to FIGs. 7 and 8, the driving member 150 according to the embodiment may be connected to the light source 110. For example, the driving member 150 may be disposed on the light source 110 and coupled with the light source 110.

The driving member 150 may move the light source 110 by using the driving force of the actuator. For example, the driving member 150 may move the light source 110 in a direction perpendicular to the optical axis OA of the light source 110 by a signal applied from the second controller. The light source 110 may be moved in at least one of first and second directions (x-axis and y-axis directions) by the driving member 150.

That is, the driving member 150 may control the position of the optical axis OA of the light source 110. For example, in an initial state in which the driving member 150 does not operate, the optical axis OA of the light source 110 may overlap the center of the first lens portion 130.

Then, when the driving member 150 operates, the light source 110 may move, and the optical axis OA may move from the position of the initial optical axis OA. Accordingly, the path of the light emitted from the light source 110 may be changed.

For example, the driving member 150 may move the light source 110 in the first direction (FIG. 7(a), a positive first direction (FIG. 7(b)) within a set range. In this case, the optical axis OA may move in the first direction from a position of the initial optical axis OA, and a path of light passing through the first lens portion 130 may move in the first direction.

In addition, although not shown in the drawing, the driving member 150 may move the light source 110 in the second direction (positive (+) second direction, negative (-) second direction) within a set range. In this case, the optical axis OA may move in the second direction from a position of the initial optical axis OA, and a path of light passing through the first lens portion 130 may move in the second direction.

The driving member 150 may move the light source 110 in first and second directions within a set range. In this case, the optical axis OA may move in a third direction (direction diagonal to the first and second directions) from the position of the initial optical axis OA, and the path of the light passing through the first lens portion 130 may move in the third direction. Accordingly, the path of light emitted from the light source 110 may pass through the first lens portion 130 and move in various directions such as the first direction, the second direction, and the third direction. That is, the driving member 150 according to the embodiment is connected to at least one of the first lens portion 130 and the light source 110, and may move at least one of the first lens portion 130 and the light source 110. Accordingly, in the embodiment, the optical axis OA of the output light passing through the first lens portion 130 may be moved, and the output light may be moved in various directions.

FIGs. 9 to 14 are diagrams for explaining a field of illumination (FOI) region formed at a distance of n meters by light emitted from a light emitting portion. The distance measuring camera 1000 according to the embodiment may control the position where the FOI region is formed by the driving force applied from the driving member 150.

Referring to FIG. 9, the distance measuring camera 1000 may emit light forward. For example, the light emitting portion 100 may provide output light to regions separated by a first distance n1 defined as n meters. In this case, a FOI angle of the output light may be about 60 degrees or less. In detail, the FOI angle of the output light may be about 55 degrees or less. In more detail, the FOI angle of the output light may be about 50 degrees or less. Accordingly, the light emitting portion 100 may form a FOI region L1 having a predetermined area in a region spaced apart from the first lens portion 130 by the first distance n1. In addition, light of a plurality of dot patterns 510 having a size corresponding to the first distance n1 and spaced apart from each other may be disposed in the FOI region L1. The plurality of dot patterns 510 may be arranged in two dimensions. The FOI region L1 may have horizontal length w1 and vertical length h1 corresponding to the first distance n1. For example, the FOI region L1 may have a rectangular shape, and the horizontal length w1 and vertical length h1 may be formed in various ratios such as 4:3, 16:9, and 18:9.

The output light emitted from the light emitting portion 100 may be provided to various regions depending on whether the driving member 150 is driven. In detail, the driving member 150 may be connected to the first lens portion 130, and the optical axis OA of the light source 110 passing through the first lens portion 130 may move by the driving force of the driving member 150.

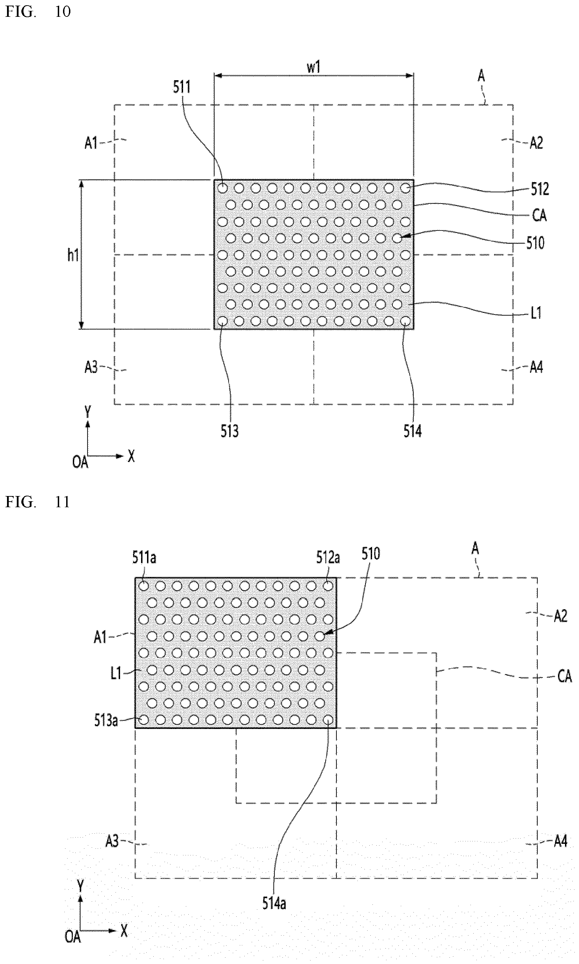

Referring to FIG. 10, the driving member 150 may not provide driving force to the first lens portion 130. That is, FIG. 10 may be a state in which the optical axis OA of the output light does not move because driving force is not applied. In this case, the FOI region L1 formed by the output light may be located in a center region defined as an initial position. Here, the center region may be referred to as a first region CA. An optical axis of the output light may correspond to the center of the first region CA.

A plurality of dot patterns 510 may be disposed in the FOI region L1. The plurality of dot patterns 510 may include a first dot pattern 511 disposed at an end of one side of the FOI region L1 and a second dot pattern 512 disposed at an end of the other side opposite to the one side. In addition, the plurality of dot patterns 510 may include a third dot pattern 513 disposed at the end of the other side of the FOI region L 1 and a fourth dot pattern 514 disposed at the end of the other side of the FOI region L1. Here, the first dot pattern 511, the second dot pattern 512, the third dot pattern 513, and the fourth dot pattern 514 may be dot patterns located at the farthest distance in the first direction. In addition, the first dot pattern 511, the third dot pattern 513, the second dot pattern 512, and the fourth dot pattern 514 may be dot patterns located at the farthest distance in the second direction. That is, when the FOI region L1 has a quadrangular shape, the first to fourth dot patterns 511, 512, 513, and 514 may be dot patterns disposed adjacent to vertices of the quadrangle.

Referring to FIGs. 11 to 14, the driving member 150 may provide driving force to the first lens portion 130. That is, in FIGs. 11 to 14, the optical axis OA may move to the light emitting portion 100 by applying a driving force. In this case, the FOI region L1 may move to one sub-region selected from among a plurality of sub-regions of the second region defined as the region set from the first region CA, or may move to another second sub-region from one of the second sub-regions.

The driving member 150 may move the first lens portion 130 in at least one of first and second directions. The driving member 150 may control the position of the FOI region L1 by moving the first lens portion 130 in at least one of first and second directions.

For example, the second region includes a plurality of sub-regions, and the plurality of sub-areas may include a 2-1 region A1, a 2-2 region A2, a 2-3 region A3 and a 2-4 region A4. Each of the 2-1 to 2-4 regions A1, A2, A3, and A4 may be a region located in a third direction (direction diagonal to the first and second directions) with respect to the first region CA. In detail, the 2-1 region A1 and the 2-2 region A2 may be disposed side by side in the first direction. Also, the 2-1 region A1 may be disposed side by side with the 2-3 region A3 in the second direction. Also, the 2-2 region A2 may be disposed side by side with the 2-4 region A4 in the second direction. Also, the 2-3 region A3 may be disposed side by side with the 2-4 region A4 in the first direction. Also, the 2-4 region A4 may be disposed side by side with the 2-1 region A1 in the third direction (a direction opposite to the first and second directions). That is, the FOI region L1 may include a total of four movable regions in addition to the first region CA.

The 2-1 to 2-4 regions A1, A2, A3, and A4 may partially overlap the first region CA based on the direction of the optical axis OA of the light source 110.

Also, based on the direction of the optical axis OA of the light source 110, the 2-1 to 2-4 regions A1, A2, A3, and A4 may not overlap each other. Alternatively, the 2-1 to 2-4 regions A1, A2, A3, and A4 may partially overlap. Alternatively, the 2-1 and 2-3 regions A1 and A3, and the 2-2 and 2-4 regions A2 and A4 partially overlap each other, and the 2-1 and 2-2 regions A1 and A2, and the 2-3 and the 2-4 regions may not partially overlap each other.

When the driving force of the driving member 150 is applied to the first lens portion 130, the first lens portion 130 may move. Accordingly, the FOI region L1 formed in the region separated by the first distance n1 may move from the first region CA.

Referring to FIG. 11, the first lens portion 130 may be moved in a positive (+) first direction and a negative (-) second direction from an initial position (a position where a driving force is not applied). In this case, the optical axis OA of the light passing through the first lens portion 130 may move in a direction perpendicular to the optical axis OA of the light source 110, for example, in a third direction (diagonal direction of the first and second directions). Accordingly, the FOI region L1 may move from the first region CA to the 2-1 region A1. That is, the optical axis of the output light passing through the first lens portion 130 may move from the center of the first region CA to the center of the 2-1 region A1.

In addition, the plurality of dot patterns 510 disposed in the FOI region L1 may move due to the movement of the FOI region L1. For example, when the FOI region L1 moves from the first region CA to the 2-1 region A1, the first dot pattern 511, the second dot pattern 512, the third dot pattern 513, and the fourth dot pattern 514 disposed on the first region CA may be moved a location the first dot pattern 511a, the second dot pattern 512a, the third dot pattern 513a, and the fourth dot pattern 514a corresponding to the 2-1 region A1. Here, the first dot pattern 511a disposed in the 2-1 region A1 may be located at the farthest distance from the second dot pattern 512a in the first direction, and the third dot pattern 513a may be located at the farthest distance from the fourth dot pattern 514a in the first direction.

In detail, when the position of the FOI region L1 is moved from the first region CA to the 2-1 region A1, the second dot pattern 512 may be moved outward more than the first dot pattern 511. For example, the position of the second dot pattern 512a moved to the 2-1 region A1 may be moved outward adjacent to the position of the first dot pattern 511 disposed in the first region CA before the movement.

In more detail, the moved second dot pattern 512a may move to an outside the first region CA where a distance between the moved second dot pattern 512a and the first dot pattern 511 before the movement is smaller than a distance between the first dot patterns 511 and 511a and the second dot patterns 512 and 512a disposed in the FOI region L1. Also, the moved fourth dot pattern 514a may move inside the first region CA. The moved fourth dot pattern 514a may move to a region adjacent to the center of the first region CA.

That is, when the FOI region L1 moves from the first region CA to the 2-1 region A1, a part of the plurality of dot patterns located at the outermost part of the 2-1 region A1 may be located outside the first region CA than a plurality of dot patterns located at the outermost part of the first region CA.

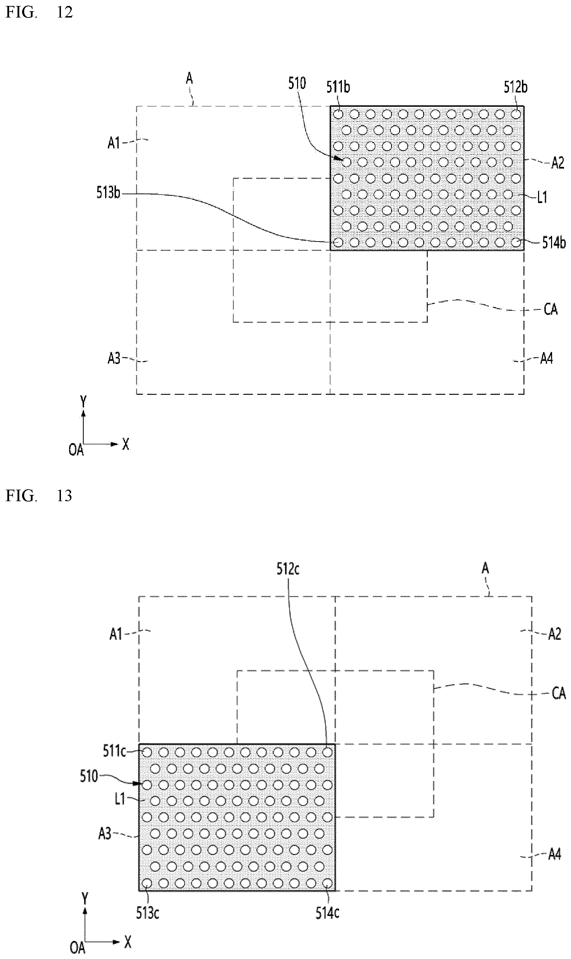

Referring to FIG. 12, the first lens portion 130 may be moved in a negative first direction and a negative second direction from the initial position by the driving member 150. In this case, the optical axis OA of the light passing through the first lens portion 130 may move in a direction perpendicular to the optical axis OA of the light source 110. Accordingly, the FOI region L1 may move from the first region CA to the 2-2 region A2. That is, the optical axis of the output light passing through the first lens portion 130 may move from the center of the first region CA to the center of the 2-2 region A2.

In addition, the plurality of dot patterns 510 disposed in the FOI region L1 may move due to the movement of the FOI region L1. For example, when the FOI region L1 moves from the first region CA to the 2-1 region A1, the first dot pattern 511, the second dot pattern 512, the third dot pattern 513, and the fourth dot pattern 514 disposed on the first region CA may move to the positions of the first dot pattern 511b and the second dot pattern 512b, the third dot pattern 513b, and the fourth dot pattern 514d corresponding to the 2-2 region. Here, the first dot pattern 511b disposed in the 2-2 region A2 may be located at the farthest distance from the second dot pattern 512b in a first direction, and the third dot pattern 513b may be located at the furthest distance from the fourth dot pattern 514b in the first direction.

In detail, when the position of the FOI region L1 is moved from the first region CA to the 2-2 region A2, the first dot pattern 511 may move outward more than a position of the second dot pattern 512. For example, the position of the first dot pattern 511b moved to the 2-2 region A2 may move outward adjacent to the position of the second dot pattern 512 disposed in the first region CA before the movement. In detail, the moved first dot pattern 511b may move to the outside of the first region CA where the distance between the moved first dot pattern 511b and the second dot pattern 512 before moving is smaller than the distance between the first dot pattern 511 and 511a and the second dot pattern 512a and 512b. Also, the moved third dot pattern 513b may move inside the first region CA. The moved third dot pattern 513b may move to a region adjacent to the center of the first region CA.

That is, when the FOI region L1 moves from the first region CA to the 2-2 region A2, a part of the plurality of dot patterns located at the outermost part of the 2-2 region A2 are, may be located outside the first region CA from a plurality of dot patterns located at the outermost part of the first region CA.

Alternatively, the first lens portion 130 may move in a negative (-) first direction from a position corresponding to the 2-1 region A1 by the driving member 150. In this case, the optical axis OA of the light passing through the first lens portion 130 may move in a direction perpendicular to the optical axis of the light source 110. Accordingly, the FOI region L1 may move from the 2-1 region A1 to the 2-2 region A2. That is, the optical axis of the output light passing through the first lens portion 130 may move from the center of the 2-1 region A1 to the center of the 2-2 region A2.

In addition, the plurality of dot patterns 510 disposed in the FOI region L1 may move due to the movement of the FOI region L1. For example, the first dot pattern 511a, the second dot pattern 512a, the third dot pattern 513a, and the fourth dot pattern 514a disposed on the 2-1 region A1 may move to the positions of the first dot pattern 511b, the second dot pattern 512b, the third dot pattern 513b, and the fourth dot pattern 514b corresponding to the 2-2 region A2.

In detail, when the position of the FOI region L1 moves from the 2-1 region A1 to the 2-2 region A2, the first dot pattern 511a may move outside more than a position of the second dot pattern 512a. For example, the position of the first dot pattern 511b moved to the 2-2 region A2 may move outside adjacent to the position of the second dot pattern 512a disposed in the 2-1 region A1 before the movement. In detail, the moved first dot pattern 511b may move to the outside of the 2-1 region A1 where the distance between the moved first dot pattern 511b and the second dot pattern 512a before moving is smaller than the distance between the first dot pattern 511a and 511b and the second dot pattern 512a and 512b.

Also, the third dot pattern 513a may move outward than the position of the fourth dot pattern 514a. For example, the position of the third dot pattern 513a moved to the 2-2 region A2 may move outside adjacent to the position of the fourth dot pattern 514a disposed in the 2-1 region A1 before the movement. In detail, the moved third dot pattern 513b may move to the outside of the 2-1 region A1 where the distance between the moved third dot pattern 513b and the fourth dot pattern 514a before moving is smaller than the distance between the third dot pattern 513a and 513b and the fourth dot patterns 514a and 514b.

Referring to FIG. 13, the first lens portion 130 may move in a positive (+) first direction and a positive (+) second direction from the initial position by the driving member 150. In this case, the optical axis OA of the light passing through the first lens portion 130 may move in a direction perpendicular to the optical axis OA of the light source 110. Accordingly, the FOI region L1 may move from the first region CA to the 2-3 region A3. That is, the optical axis of the output light passing through the first lens portion 130 may move from the center of the first region CA to the center of the 2-3 region A3.

As the FOI region L1 moves, the plurality of dot patterns 510 disposed in the FOI region L1 may move. For example, when the FOI region L1 moves from the first region CA to the 2-3 region A3, the first dot pattern 511, the second dot pattern 512, the third dot pattern 513, and the fourth dot pattern 514 disposed on the first region CA may be moved the position of the first dot pattern 511c, the second dot pattern 512c, the third dot pattern 513c and the fourth dot pattern 514c corresponding to the 2-3 region A3. Here, the first dot pattern 511c disposed in the 2-3 region A3 may be located at the farthest distance from the second dot pattern 512c in a first direction, and the third dot pattern 513c may be located at the furthest distance from the fourth dot pattern 514c in the first direction.

In detail, when the position of the FOI region L1 is moved from the first region CA to the 2-3 region A3, the third dot pattern 513 may move outside than a position of the fourth dot pattern 514. For example, the position of the fourth dot pattern 514c moved to the 2-3 region A3 may move outside adjacent to the position of the third dot pattern 513 disposed in the first region CA before the movement. In detail, the moved fourth dot pattern 514c may move the outside of the first region CA where the distance between the moved fourth dot pattern 514c and the third dot pattern 513 before moving is smaller than the distance between the third dot pattern 513 and 513c and the fourth dot patterns 514 and 514c. Also, the moved second dot pattern 512c may move inside the first region CA. The moved second dot pattern 512c may move to a region adjacent to the center of the first region CA. That is, when the FOI region L1 moves from the first region CA to the 2-3 region A3, a portion of the plurality of dot patterns located at the outermost point in the 2-3 region A3 is, may be located outside the first region CA from a plurality of dot patterns located at the outermost part of the first region CA. Alternatively, the first lens portion 130 may move in a positive (+) second direction from a position corresponding to the 2-1 region A1 by the driving member 150. In this case, the optical axis OA of the light passing through the first lens portion 130 may move in a direction perpendicular to the optical axis of the light source 110. Accordingly, the FOI region L1 may move from the 2-1 region A1 to the 2-3 region A3. That is, the optical axis of the output light passing through the first lens portion 130 may move from the center of the 2-1 region A1 to the center of the 2-3 region A3.

As the FOI region L1 moves, the plurality of dot patterns 510 disposed in the FOI region L1 may move. For example, the first dot pattern 511a, the second dot pattern 512a, the third dot pattern 513a, and the fourth dot pattern 514a disposed on the 2-1 region A1 may move to the positions of the first dot pattern 511c, the second dot pattern 512c, the third dot pattern 513c, and the fourth dot pattern 514c corresponding to the 2-3 region A3.

In detail, when the location of the FOI region L1 moves from the 2-1 region A1 to the 2-3 region A3, the first dot pattern 511a may move outside the third dot pattern 513a. For example, the position of the first dot pattern 511c moved to the 2-3 region A3 may move outside adjacent to the position of the third dot pattern 513a disposed in the 2-1 region A1 before the movement. In detail, the moved first dot pattern 511c may move to the outside of the 2-1 region A1 where the distance between the moved first dot pattern 511c and the third dot pattern 513a before moving is smaller than between the first dot patterns 511a and 511c and the third dot patterns 513a and 513c.

Also, the second dot pattern 512a may move outward from the fourth dot pattern 514a. For example, the position of the second dot pattern 512c moved to the 2-3 region A3 may move outside adjacent to the position of the fourth dot pattern 514a disposed in the 2-1 region A1 before the movement. In detail, the moved second dot pattern 512c may move the outside of the 2-1 region where the distance between the moved second dot pattern 512c and the fourth dot pattern 514a before moving is smaller than the distance between the second dot pattern 512a and 512c and the fourth dot patterns 514a and 514c.

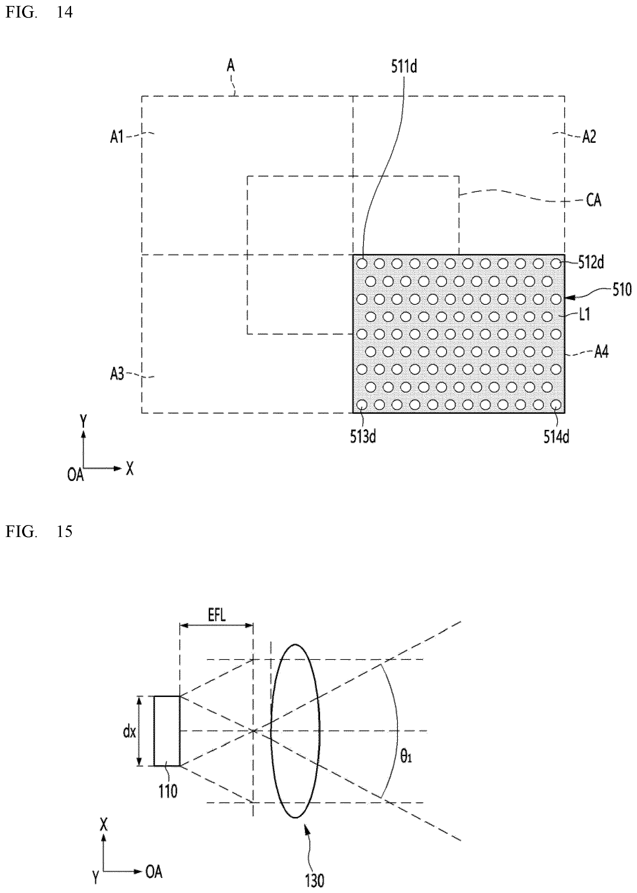

Also, referring to FIG. 14, the first lens portion 130 may be moved in a negative (-) first direction and a positive (+) second direction from the initial position by the driving member 150. In this case, the optical axis OA of the light passing through the first lens portion 130 may move in a direction perpendicular to the optical axis OA of the light source 110. Accordingly, the FOI region L1 may move from the first region CA to the second-fourth region A4. That is, the optical axis of the output light passing through the first lens portion 130 may move from the center of the first region CA to the center of the second-fourth region A4.

In addition, the plurality of dot patterns 510 disposed in the FOI region L1 may move due to the movement of the FOI region L1. For example, when the FOI region L1 moves from the first region CA to the 2-4 region A4, the first dot pattern 511, the second dot pattern 512, the third dot pattern 513, and the fourth dot pattern 514 disposed on the first region CA may be moved to a position of the first dot pattern 511d, the second dot pattern 512d, the positions of the third dot pattern 513d and the fourth dot pattern 514d corresponding to the 2-4 region A4. Here, the first dot pattern 511d disposed in the 2-4 region A4 may be located at the farthest distance from the second dot pattern 512d in the first direction, and the third dot pattern 513d may be located at the furthest distance from the fourth dot pattern 514d in the first direction.

In detail, when the position of the FOI region L1 moves from the first region CA to the 2-4 region A4, the third dot pattern 513 may move outward more than a position of the fourth dot pattern 514. For example, the position of the third dot pattern 513d moved to the 2-4 region A4 may move outward adjacent to the position of the fourth dot pattern 514 disposed in the first region CA before the movement. In detail, the moved third dot pattern 513d may move the outside of the first region CA where the distance between the moved third dot pattern 513d and the fourth dot pattern 514 before moving is smaller than the distance between the third dot pattern 513 and 513d and the fourth dot pattern 514 and 514d. Also, the moved first dot pattern 511d may move inside the first region CA. The moved first dot pattern. 511d may move to a region adjacent to the center of the first region CA. That is, when the FOI region L1 moves from the first region CA to the 2-4 region A4, a portion of the plurality of dot patterns located at the outermost point in the 2-4 region A4 is, may be located outside the first region CA from a plurality of dot patterns located at the outermost part of the first region CA. Alternatively, the first lens portion 130 may move in a positive (+) second direction from a position corresponding to the 2-2 region A2 by the driving member 150. In this case, the optical axis OA of the light passing through the first lens portion 130 may move in a direction perpendicular to the optical axis of the light source 110. Accordingly, the FOI region L1 may move from the 2-2 region A2 to the 2-4 region A4. That is, the optical axis of the output light passing through the first lens portion 130 may move from the center of the 2-2 region A2 to the center of the 2-4 region A4.

As the FOI region L1 moves, the plurality of dot patterns 510 disposed in the FOI region L1 may move. For example, the first dot pattern 511b, the second dot pattern 512b, the third dot pattern 513b, and the fourth dot pattern 514b disposed on the 2-2 region A2 may move to the positions of the first dot pattern 511d, the second dot pattern 512d, the third dot pattern 513d, and the fourth dot pattern 514d corresponding to the 2-4 region A4.

In detail, when the position of the FOI region L1 moves from the 2-1 region A1 to the 2-4 region A4, the first dot pattern 511b may move outward more than the position of the third dot pattern 513b. For example, the position of the first dot pattern 511d moved to the 2-4 region A4 may move outward adjacent to the position of the third dot pattern 513b disposed in the 2-2 region A2 before the movement. In detail, the moved first dot pattern 511d may mover the outside of the 2-2 region A2 where the distance between the moved first dot pattern 511d and the third dot pattern 513b before moving is smaller than the distance between the first dot pattern 511b and 511d and the third dot patterns 513b and 513d.

Also, the second dot pattern 512b may move outward from the fourth dot pattern 514b. For example, the position of the second dot pattern 512b moved to the 2-4 region A4 may move outward adjacent to the position of the fourth dot pattern 514b disposed in the 2-2 region A2 before the movement. In detail, the moved second dot pattern 512d may move to the outside of the 2-2 region A2 where the distance between the moved second dot pattern 512d and the fourth dot pattern 514b before moving is smaller than the second dot pattern 512b and 512d and the fourth dot patterns 514b and 514d. Alternatively, the first lens portion 130 may move in a negative (-) first direction from a position corresponding to the 2-3 region A3 by the driving member 150. In this case, the optical axis OA of the light passing through the first lens portion 130 may move in a direction perpendicular to the optical axis of the light source 110. Accordingly, the FOI region L1 may move from the 2-3 region A3 to the 2-4 region A4. That is, the optical axis of the output light passing through the first lens portion 130 may move from the center of the 2-3 region A3 to the center of the 2-4 region A4.

As the FOI region L1 moves, the plurality of dot patterns 510 disposed in the FOI region L1 may move. For example, the first dot pattern 511c, the second dot pattern 512c, the third dot pattern 513c, and the fourth dot pattern 514c disposed on the 2-3 region A3 may move to the positions of the first dot pattern 511d, the second dot pattern 512d, the third dot pattern 513d, and the fourth dot pattern 514d corresponding to the 2-4 region A4.

In detail, when the position of the FOI region L1 moves from the 2-3 region A3 to the 2-4 region A4, the first dot pattern 511c may move outward more than the second dot pattern 512c. For example, the position of the first dot pattern 511d moved to the 2-4 region A4 may move outward adjacent to the position of the second dot pattern 512c disposed in the 2-3 region A3 before the movement. In detail, the moved first dot pattern 511d may move the outside of the 2-3 region A3 where the distance between the moved first dot pattern 511d and the second dot pattern 512c before moving is smaller than the distance between the first dot pattern 511c and 511d and the first dot pattern 512c and 512d.

Also, the third dot pattern 513c may move outward more than the fourth dot pattern 514c. For example, the position of the third dot pattern 513d moved to the 2-4 region A4 may move outward adjacent to the position of the fourth dot pattern 514c disposed in the 2-3 region A3 before the movement. In detail, the moved third dot pattern 513d may move the outside of the 2-3 region A3 wherein the distance between the moved third dot pattern 513d and the fourth dot pattern 514c before moving is smaller than the distance between the third dot pattern 513c and 513d and the fourth dot patterns 514c and 514d.

As described above, the distance measuring camera 1000 according to the embodiment may control the position of the first lens portion 130 using the driving member 150. In detail, in the embodiment, the position of the optical axis OA of the output light passing through the first lens portion 130 may be controlled by using the driving force of the driving member 150. Accordingly, the embodiment may control the position of the FOI region L1 formed in the region separated by the first distance n1 and control the FOI angle.

For example, referring to FIG. 15, when driving force is not applied to the first lens portion 130, the FOI angle θ1 of the output light in the first direction (x-axis direction) may satisfy the following equation.

[Equation 1]

$$\theta1 = 2 \times \tan^{-1} \frac{\frac{dx}{2}}{EFL}$$

In Equation 1, θ1 may mean the FOI angle of the output light of the light emitting portion 100 in the first direction in an initial state in which no driving force is applied, and dx may mean a length of the light emitting device of the light source 110 in the first direction.

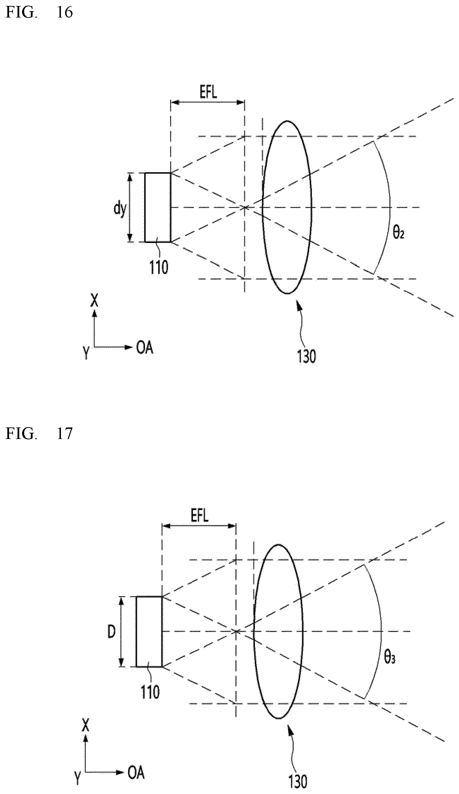

Also, referring to FIG. 16, when driving force is not applied to the first lens portion 130, the FOI angle θ2 of the output light in the second direction (y-axis direction) may satisfy Equation 2 below.

## [Equation 2]

$$\theta2 = 2 \times \tan^{-1} \frac{\frac{dy}{2}}{EFL}$$

In Equation 2, θ2 may mean the FOI angle of the output light of the light emitting portion 100 in the first direction in an initial state in which no driving force is applied, and dy may mean the length of the light emitting device of the light source 110 in the first direction.

Also, referring to FIG. 17, when no driving force is applied to the first lens portion 130, the total FOI angle θ3 of the output light may satisfy Equation 3 below.

## [Equation 3]

$$\theta3 = 2 \times \tan^{-1} \frac{\frac{D}{2}}{EFL}$$

In Equation 3, θ3 may mean the total FOI angle of the output light of the light emitting portion 100 in an initial state in which no driving force is applied, and D may mean the diagonal length of the effective region of the light emitting device of the light source 110.

In addition, as described above, when the first lens portion 130 moves in the first direction (x-axis direction) by the driving member 150, the FOI angle of the output light in the first direction may satisfy Equation 4 below.

## [Equation 4]

$$S1 = (\tan \frac{FOI_X}{2} \times EFL) - \frac{dx}{2}$$

In Equation 4, S1 may mean the moving distance of the first lens portion 130 moving in the first direction with respect to the optical axis OA of the light source 110, and FOIx may mean the FOI angle of the first direction changed by the driving force. In addition, EFL means the effective focal length of the first lens portion 130, and dx means the length of the light source 110 in the first direction.

At this time, the range of change of the FOI angle in the first direction may satisfy Equation 5 below.

## [Equation 5]

$$\tan^{-1}\left(\frac{(\frac{-dx}{2}+S1)}{EFL}\right) \leq FOX_X \leq \tan^{-1}\left(\frac{(\frac{dx}{2}+S1)}{EFL}\right)$$

In Equation 5, FOIx means the FOI angle in the first direction changed by the driving force, and dx means the length of the light source 110 in the first direction. In addition, S1 means a moving distance of the first lens portion 130 moving in a first direction with respect to the optical axis OA of the light source 110, and EFL mean the effective focal length of the first lens portion 130.

In addition, the degree to which the first lens portion 130 is moved in the first direction by the driving member 150 may satisfy Equation 6 below.

[Equation 6]

$$S1 < (\tan 50^\circ \ \times EFL) - \frac{dx}{2}$$

In Equation 6, S 1 means a movement distance in which the first lens portion 130 moves in a first direction with respect to the optical axis OA of each of the light sources 110, and dx means a length of the light source 110 in the first direction.

In detail, the degree to which the first lens portion 130 is moved in the first direction by the driving member 150 may satisfy Equation 6-2 below.

[Equation 6-2]

$$S1 < (\tan 45^\circ \ \times EFL) - \frac{dx}{2}$$

In Equation 6-2, S 1 means a movement distance in which the first lens portion 130 moves in a first direction with respect to the optical axis OA of the light source 110, and dx means a length of the light source 110 in the first direction.

In more detail, the degree to which the first lens portion 130 is moved in the first direction by the driving member 150 may satisfy Equation 6-3 below.

[Equation 6-3]

$$S1 < (\tan 40^\circ \ \times EFL) - \frac{dx}{2}$$

In Equation 6-3, S1 means a moving distance of the first lens portion 130 moving in a first direction based on the optical axis OA of the light source 110, and dx means the length of the light source 110 in the first direction.

In addition, when the first lens portion 130 moves in the second direction by the driving member 150, the FOI angle of the output light in the second direction (y-axis direction) may satisfy Equation 6 below.

[Equation 7]

$$S2 = (\tan \frac{FOI_Y}{2} \times EFL) - \frac{dy}{2}$$

In Equation 7, S2 means a moving distance of the first lens portion 130 moving in a second direction based on the optical axis OA of the light source 110, and $FOI_Y$ means the FOI angle of the second direction changed by the driving force. Also, EFL means the effective focal length of the first lens portion, and dy means the length of the light source 110 in the second direction. At this time, the change range of the FOI angle in the second direction may satisfy Equation 7 below.

[Equation 8]

$$\tan^{-1}\left|\frac{(\frac{-dy}{2}+S2)}{EFL}\right| \leq FOX_Y \leq \tan^{-1}\left|\frac{(\frac{dy}{2}+S2)}{EFL}\right|$$

In Equation 8, $FOI_Y$ means the FOI angle in the second direction changed by the driving force, and dy means the length of the light source 110 in the second direction. Further, S2 means a moving distance of the first lens portion 130 moving in the second direction with respect to the optical axis OA of the light source 110, and EFL means the effective focal length of the first lens portion 130.

In addition, the degree to which the first lens portion 130 is moved in the second direction by the driving member 150 according to the embodiment may satisfy Equation 9 below.

[Equation 9]

$$S2 < (\tan 50^\circ \times EFL) - \frac{dy}{2}$$

In Equation 9, S2 means a moving distance of the first lens portion 130 moving in the first and second directions based on the optical axis OA of the light source 110, and dy means the length of the light source 110 in the second direction.

In detail, the degree to which the first lens portion 130 is moved in the second direction by the driving member 150 according to the embodiment may satisfy Equation 9-2 below.

[Equation 9-2]

$$S2 < (\tan 45^\circ \times EFL) - \frac{dy}{2}$$

In Equation 9, S2 means a moving distance of the first lens portion 130 moving in the first and second directions based on the optical axis OA of the light source 110, and dy means the length of the light source 110 in the second direction.

In more detail, the degree to which the first lens portion 130 is moved in the second direction by the driving member 150 according to the embodiment may satisfy Equation 9-3 below.

[Equation 9-3]

$$S2 < (\tan 40^\circ \times EFL) - \frac{dy}{2}$$

In Equation 9-3, S2 means a movement distance in which the first lens portion 130 moves in each of the first and second directions based on the optical axis OA of the light source 110, and dy means the length of the light source 110 in the second direction.

In addition, based on Equations 4 to 9 above, when the first lens portion 130 moves in at least one of the first and second directions, the total FOI angle of the output light may satisfy Equation 10 below.

[Equation 10]

$$FOI = 2 \times \tan^{-1} \sqrt{(\tan\frac{FOI_X}{2})^2 + (\tan\frac{FOI_Y}{2})^2}$$

In Equation 10, FOI means the total FOI angle of the distance measuring camera 1000. Also, FOIx means the FOI angle in the first direction changed by the driving force, and $FOI_Y$ means the FOI angle in the second direction changed by the driving force.

In addition, the degree to which the first lens portion 130 is moved in the first and second directions by the driving member 150 according to the embodiment may be set according to the size of the light source 110 and the size of the image sensor 310. For example, a movement distance at which the first lens portion 130 moves in the first and second directions may satisfy Equation 11 below.

[Equation 11]

$$S1 \leq 0.8 \times dx, \; S2 \leq 0.6 \times dy$$

In Equation 11, S1 means a moving distance of the first lens portion 130 moving in the first direction with respect to the optical axis OA of the light source 110, and S2 means a moving distance of the first lens portion 130 moving in the second direction based the optical axis OA of the light source 110. That is, the driving member 150 according to the embodiment may move the position of the first lens portion 130 within the above range.

Also, the driving member 150 may control the position of the first lens portion 130 in consideration of the size of the image sensor 310. In detail, the driving member 150 controls the position of the first lens portion 130 to correspond to the first direction length a and the second direction length b of the image sensor 310, and the following equation 12 may be satisfied.

[Equation 12]

$$\tan\frac{FOI_X}{2} : \tan\frac{FOI_Y}{2} = a:b$$

In Equation 12, FOIx means the FOI angle in the first direction, and $FOI_Y$ means the FOI angle in the second direction. Also, a and b denote lengths of the image sensor 310 in the first and second directions. That is, in the embodiment, the position of the first lens portion 130 may be controlled in consideration of the sizes a and b of the image sensor 310 in the first and second directions. In detail, the driving member 150 may control the position of the FOI region L1 by moving the first lens portion 130 within a region corresponding to the image sensor 310.

Accordingly, the distance measuring camera 1000 according to the embodiment may detect the output light based on an initially set calibration value. In detail, the position of the FOI region L1 formed in the region spaced apart by the first distance n1 by the driving member 150 may change, and the positions of the plurality of dot patterns 510 in the FOI region L1 may also change. However, in the embodiment, the first lens portion 130 is moved to correspond to the horizontal size a and vertical size b of the image sensor 310, and a plurality of dot patterns located within the FOI region L1 510 may move within an initially set calibration region. Therefore, the output light whose position of the plurality of dot patterns 510 is changed by moving the position of the FOI region L1 by the driving force may be effectively sensed based on the initially set calibration value without separate calibration correction.

Also, the distance measuring camera 1000 according to the embodiment may operate in various modes. In detail, the distance measuring camera 1000 may include various modes such as a full mode, a center mode, and a tracking mode.

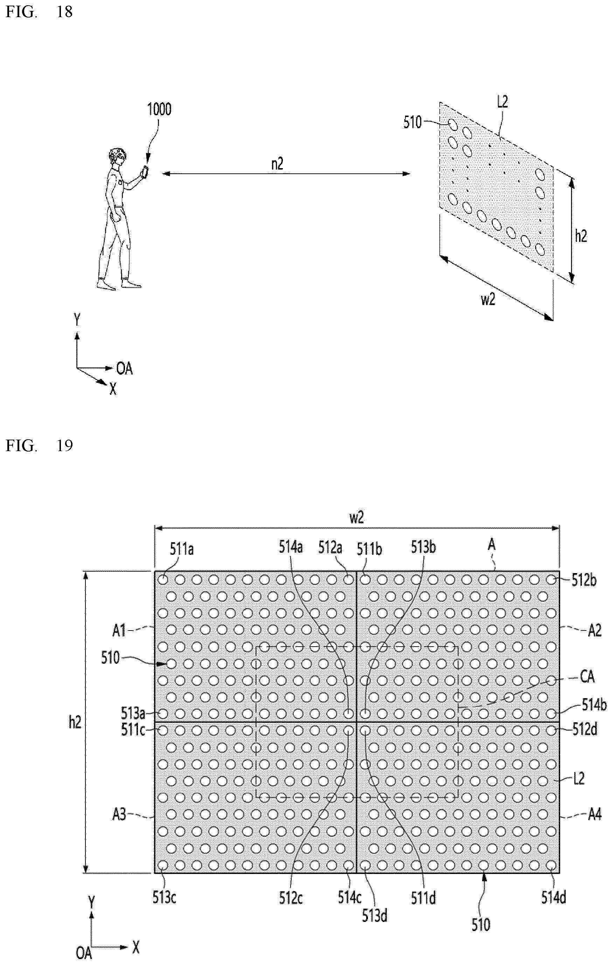

First, all modes of the distance measuring camera 1000 may be described. As shown in FIGs. 18 and 19, the distance measuring camera 1000 according to the embodiment may operate in full mode to provide output light having a wider FOI angle and FOI region.

For example, when the frame rate of the distance measuring camera 1000 is 30 FPS (Frame per second) for convenience of description and one frame includes 4 subframes, the driving member 150 may control the location of the FOI region L1 for each time corresponding to one subframe.

In detail, in the 1/4 subframe, the FOI region L1 may move from the first region CA to one selected from the 2-1 to 2-4 regions A1, A2, A3, and A4. For example, in the 1/4 subframe, the FOI region L1 may move from the first region CA to the 2-1 region A1.

Subsequently, in the 2/4 subframe, the FOI region L1 may move from a specific region located in the 1/4 subframe to another region. In detail, the FOI region may move to another region closest to the specific region. For example, when the FOI region L1 is located in the 2-1 region A1 in the 1/4 subframe, the FOI region L1 in the 2/4 subframe maty move to the 2-2 region A2 disposed side by side with the 2-1 region A1. Alternatively, in the 2/4 subframe, the FOI region L1 may move to the 2-3 region A3.

Subsequently, in the 3/4 subframe, the FOI region L1 may move from a specific region located in the 2/4 subframe to another region. In detail, the FOI region may move to another region closest to the specific region. For example, when the FOI region L1 is located in the 2-2 region A2 in the 2/4 subframe, the FOI region L1 in the 3/4 subframe may move to the 2-4 region A4 disposed side by side with the 2-2 region A2. Alternatively, when the FOI region L1 is located in the 2-3 region A3 in the 2/4 subframe, the FOI region in the 3/4 subframe may move to the 2-4 region A4.

Subsequently, in the 4/4 subframe, the FOI region L1 may move from a specific region located in the 3/4 subframe to another region. In detail, the FOI region may move to another region closest to the specific region. For example, when the FOI region L1 is located in the 2-4 region A4 in the 3/4 subframe, the FOI region L1 in the 4/4 subframe may move to the 2-3 region A3 disposed side by side with the 2-4 region A4. That is, the FOI region L1 according to the embodiment may sequentially move to the 2-1 region A1, the 2-2 region A2, the 2-4 region A4, and the 2-3 region A3 from the first region CA as a starting point in one frame.

Alternatively, when the FOI region L1 is located in the 2-3 region A3 in the 2/4 subframe and the 2-4 region A4 in the 3/4 subframe, the FOI region in the 4/4 subframe may move from the 2-4 region A4 to the 2-2 region A2. That is, the FOI region L1 according to the embodiment may sequentially move to the 2-1 region A1, the 2-3 region A3, the 2-4 region A4, and the 2-2 region A2 from the first region CA as a starting point in on frame.

Therefore, in the distance measuring camera 1000 according to the embodiment, when an object located in the front is located at a second distance n2 closer than the first distance n1 or there is a request for a full mode operation, the position of the FOI region is sequentially moved to the 2-1 to 2-4 regions A1, A2, A3, and A4 in units of subframes and an entire region A including the 2-1 to 2-4 regions A1, A2, A3, and A4 may scan once.

In addition, when the one frame includes more subframes than four subframes, for example, eight subframes, an entire region A including the 2-1 to 2-4 regions A1, A2, A3, and A4 may scan twice in one frame, or at least one region selected from the 2-1 to 2-4 regions A1, A2, A3, and A4 may scan for a period of time corresponding to a plurality of subframes and may scan the entire region A.

Accordingly, output light having a wider FOI angle and the second FOI region L2 having a larger region may be provided to the object located in the front for a set unit time. For example, the second FOI region L2 formed at the second distance n2 may have a horizontal lengthw2 and a vertical length h2 greater than the horizontal lengths w1 and h1 lengths of the first FOI region L1. In addition, the second FOI region L2 may have a rectangular shape, and the horizontal length w2 and the vertical length h2 may be formed in various ratios such as 4:3, 16:9, and 18:9.

For example, referring to Table 1 below, the light emitting device of the light source 110 according to the embodiment may have a length of about 0.58 mm in a first direction and a length of about 0.48 mm in a second direction. In addition, the driving member 150 moves the first lens portion 130 in at least one of the first and second directions within a set range (about $\pm 0.295$ mm in the first direction and about $\pm 0.199$ mm in the second direction), and may move the optical axis OA of the output light passing through the first lens portion 130 from the position of the initial optical axis OA to which no driving force is applied. Accordingly, FOI angles of the output light in the first and second directions and overall FOI angles may be changed.

[Table 1]

| EFL | (mm) | 0.84 |
|---|---|---|
| Light emitting | Length (mm) in the first direction | 0.58 |
| device | Length (mm) in the second direction | 0.48 |

(continued)

| | | | |
|---|---|---|---|
| Driving member | Movement distance (mm) of the first direction | 0.295 | -0.295 |
| | Movement distance (mm) of the second direction | 0.199 | -0.199 |
| FOI angle in the first direction | Initial angle (deg) at which driving force is not applied | 38.1 | 38.1 |
| | Changed angle (deg) when driving force is applied | 34.5 | 34.5 |
| | Minimum change angle (deg) | 0.3 | -34.9 |
| | Maximum change angle (deg) | 34.9 | -0.3 |
| | Total change angle (deg) | 69.7 | 69.7 |
| FOI angle in the second direction | Initial angle (deg) at which driving force is not applied | 31.9 | 31.9 |
| | Changed angle (deg) when driving force is applied | 30.4 | 30.4 |
| | Minimum change angle (deg) | -2.8 | -27.6 |
| | Maximum change angle (deg) | 27.6 | 2.8 |
| | Total change angle (deg) | 55.2 | 55.2 |

In detail, referring to the above Equations and Table 1, when the driving force of the driving member 150 is not provided, it may operate in the center mode. When the distance measuring camera 1000 operates in the center mode, the FOI region L1 formed in a region spaced apart from the distance measuring camera 1000 at a predetermined interval may be located in the first region CA. In addition, when the distance measuring camera 1000 operates in the center mode, the FOI angle of the output light emitted from the light emitting portion 100 in the first direction may be about 38.1 degrees and the FOI angle in the second direction may be about 31.9 degrees. there is. In addition, the total FOI angle of the output light may be about 48.3 degrees. However, when the object is located at the second distance n2 or there is a request for full mode operation, the first lens portion 130 may move within a set range, and the FOI region L1 The 2-1 to 2-4 regions A1, A2, A3, and A4 may be scanned at least once.

Accordingly, in the full mode, the angle in the first direction, the angle in the second direction, and the total FOI angle of the output light may further increase. In detail, the FOI angle of the output light provided in the full mode may have a larger FOI angle than the selection mode formed in the region of one selected from the FOI angle of the output light provided in the center mode or the 2-1 to 2-4 regions A1, A2, A3, and A4. For example, when the first lens portion 130 moves in the first direction, an angle (total change angle) of the output light with respect to the first direction may be about 100 degrees or less. In detail, the angle (total change angle) may be about 90 degrees or less. In more detail, the angle (total change angle) may be about 80 degrees or less. Also, when the first lens portion 130 moves in the second direction, an angle (total change angle) of the output light with respect to the second direction may be about 100 degrees or less. In detail, the angle (total change angle) may be about 90 degrees or less. In more detail, the angle (total change angle) may be about 80 degrees or less.

For example, when the first lens portion 130 moves as shown in Table 1, the angle in the first direction of the output light may increase to about 69.7 degrees and the angle in the second direction may increase to about 55.2 degrees, and the total FOI angle of the output light is about 82.1 degrees and may be greatly increased compared to the center mode, which is a mode in which the first lens portion 130 does not move. That is, the distance measuring camera 1000 according to the embodiment controls the positions of the 2-1 to 2-4 regions A1, A2, A3, and A4 so that the output light has a wider FOI angle, and the formed second FOI region L2 may be larger region than that of the FOI region L1. In addition, the distance measuring camera 1000 according to the embodiment may effectively provide light to an object located at the front using a light emitting device having a relatively small size, a light emitting device including a relatively small number of emitters, or a light source 110 having a relatively small FOI angle.

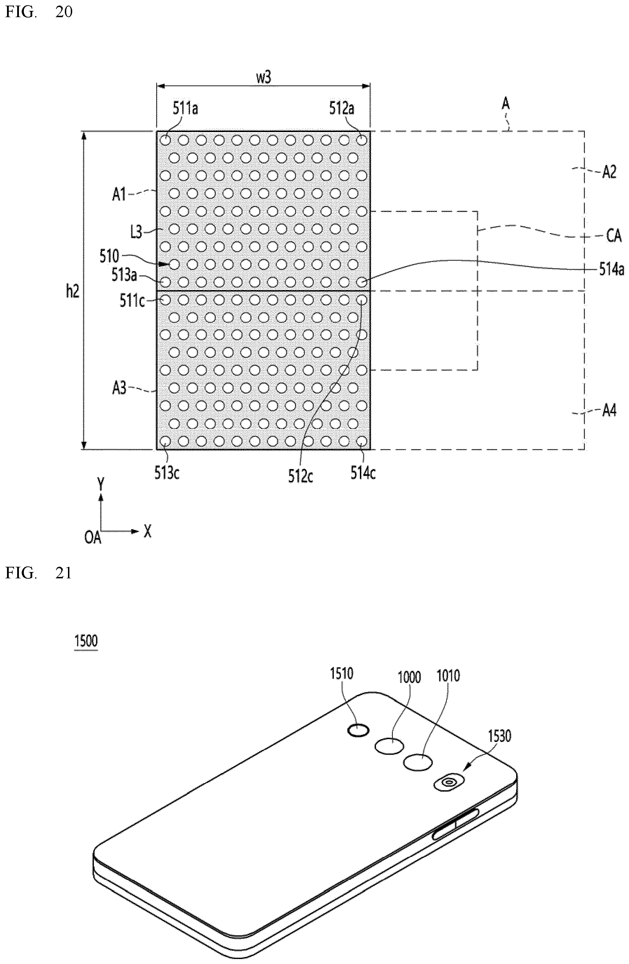

Referring to FIG. 20, the distance measuring camera 1000 according to the embodiment may control the position of the FOI region L1 according to the position of a front object. For example, the object may be located in a region corresponding to the 2-1 region A1 and the 2-3 region A3 with respect to the entire region A. In this case, the FOI region L1 may provide output light that scans the 2-1 region A1 and the 2-3 region A3 in one frame. That is, by scanning the 2-1 region A1 and the 2-3 region A3 in units of subframes, output light for scanning the regions in one frame may be provided.

Accordingly, output light having a wider FOI angle and a larger region of the third FOI region L3 may be provided to the object located in the front for a set unit time. For example, the third FOI region L3 formed in regions spaced apart by a predetermined interval may have a horizontal length w3 and a vertical length h3 equal to or different from the horizontal lengths w1 and h1 of the first FOI region L1. When the third FOI region L3 scans a region corresponding to the 2-1 region A1 and the 2-3 region A3, the vertical length w3 of the third FOI region L3 is equal to the horizontal length w1 of the FOI region L1 and may be shorter than the horizontal length w2 of the second FOI region L2, and the vertical length h3 of the third FOI region L3 may be equal to the vertical length h2 of the second region L2. Accordingly, the embodiment may effectively provide output light to an object located in a region corresponding to the 2-1 and 2-3 regions A1 and A3. Also, the distance measuring camera 1000 may operate in a tracking mode by controlling the position of the FOI region L1. In detail, the distance measuring camera 1000 may control the position of the FOI region L1 according to the position, shape, size, etc. of an object located in the front. For example, an object located at a first distance n1 from the distance measuring camera 1000 may move at a second distance n2 closer than the first distance n1. In this case, the driving member 150 may control the position of the FOI region L1 in consideration of the moving direction, interval, size, etc. of the object, and may move the FOI region L1 in a region corresponding to the object. In addition, the distance measuring camera 1000 may selectively provide light to each of a plurality of objects located at various distances or simultaneously provide light by controlling the FOI region L1. Accordingly, the distance measuring camera 1000 according to the embodiment may effectively provide output light toward a plurality of objects or a moving object by using the light source 110 having a relatively small FOI angle.

In addition, the distance measuring camera 1000 may selectively provide output light of various FOI angles to an object located in a short distance as well as a long distance through the movement of the FOI region by the driving member 150. Accordingly, the distance measuring camera 1000 may have improved power consumption and spatial resolution characteristics, and may effectively detect depth information of an object located in the front. In addition, in the above description, for convenience of explanation, it has been described that the driving member 150 controls the position of the first lens portion 130, but the driving member 150 is connected to the light source 110 or connected to the light source 110 and the first lens portion 130 to control the position of the FOI region L1.

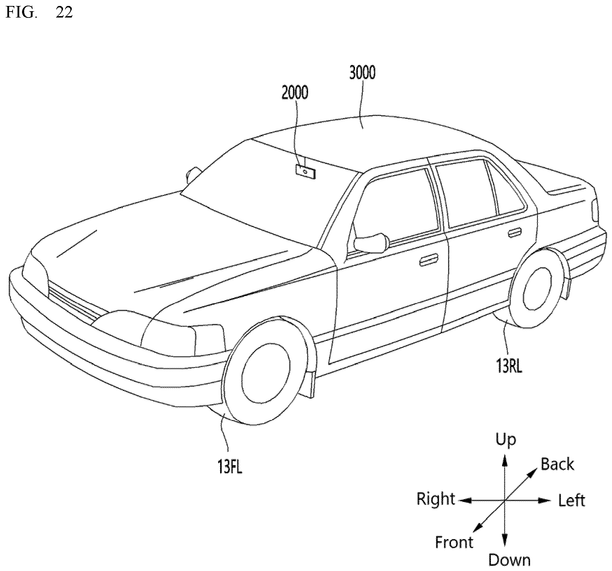

Referring to FIGs. 21 and 22, the distance measuring camera according to the embodiment may be applied to an optical device. Referring to FIG. 21, a distance measuring camera 1000 according to an embodiment may be applied to a mobile terminal 1500. The mobile terminal 1500 according to the embodiment may have a first camera module 1000 and a second camera module 1010 disposed on the rear side. The first camera module 1000 may include the light emitting portion 100 and the light receiving portion 300 as the above-described distance measuring camera. The first camera module 1000 may be a Time of Flight (TOF) camera.

The second camera module 1010 may include an image capture function. In addition, the second camera module 1010 may include at least one of an auto focus function, a zoom function, and an OIS function. The second camera module 1010 may process an image frame of a still image or a moving image obtained by an image sensor in a shooting mode or a video call mode. The processed image frame may be displayed on a predetermined display unit and stored in a memory. In addition, although not shown in the drawing, a camera may be disposed on the front side of the mobile terminal 1500. A flash module 1530 may be disposed on a rear surface of the mobile terminal 1500. The flash module 1530 may include a light emitting device emitting light therein. The flash module 1530 may be operated by operating a camera of a mobile terminal or by a user's control. Accordingly, the user may photograph and display an object using the mobile terminal 1500. In addition, the user can effectively grasp the depth information of the object using the first camera module 1000 and sense the depth information of the object in real time.

Referring to FIG. 22, a distance measuring camera 1000 according to an embodiment may be applied to a vehicle 3000. The vehicle 3000 according to the embodiment may include wheels 13FL and 13FR rotating by a power source and a predetermined sensor. The sensor may include the camera sensor 2000, and the camera sensor 1000 may be a camera sensor including the distance measuring camera 1000 described above. The vehicle 3000 according to the embodiment may obtain image information and depth information through the camera sensor 2000 that captures a front image or a surrounding image, and may determine a lane unidentified situation using the image and depth information, and create a vertical lane when the lane is not identified. For example, the camera sensor 2000 may obtain a front image by capturing the front of the vehicle 3000, and a processor (not shown) may obtain image information by analyzing an object included in the front image. For example, when objects such as lanes, adjacent vehicles, driving obstacles, and indirect road markings such as median strips, curbs, and roadside trees are captured in an image captured by the camera sensor 2000, the processor stores image information of these objects. In addition, depth information may be detected. That is, the embodiment may provide more specific and accurate information about an object to the occupant of the vehicle 3000.

Features, structures, effects, etc. described in the embodiments above are included in at least one embodiment of the present invention, and are not necessarily limited to only one embodiment. Furthermore, the features, structures, effects, etc. illustrated in each embodiment can be combined or modified with respect to other embodiments by those skilled in the art in the field to which the embodiments belong. Therefore, contents related to these combinations and variations should be construed as being included in the scope of the present invention. In addition, although the above has been described with a focus on the embodiments, these are only examples and do not limit the present invention, and those skilled in the art to which the present invention belongs can exemplify the above to the extent that does not deviate from the essential characteristics of the present embodiment. It will be seen that various variations and applications that have not been made are possible. For example, each component specifically shown in the embodiment can be modified and implemented. And the differences related to these modifications and applications should be construed as being included in the scope of the present invention as defined in the appended claims.

**Claims**

1. A distance measuring camera comprising:

an image sensor;
a light source;
a first lens portion including a plurality of lenses disposed on the light source; and
a driving member for moving the light source or the first lens portion in at least one direction of a first direction and a second direction perpendicular to an optical axis of the first lens portion,
wherein output light emitted from the light source passes through the first lens portion and form a field of illumination (FOI) region including a plurality of dot patterns arranged in two-dimension in a region spaced apart from the first lens portion,
wherein the driving member controls a position of the FOI region to be located in a first region or a second region, and
wherein when the driving member moves the position of the FOI region from the first region to the second region, a first dot pattern located at one end of the plurality of dot patterns is moved outward relative to the first region than a second dot pattern located at the other end of the plurality of dot patterns.

2. The distance measuring camera of claim 1, wherein a distance between the second dot pattern moved to the second region and the first dot pattern in the first region before movement is smaller than a distance between the first point pattern and the second point pattern disposed within the FOI region located in the first or second region.

3. The distance measuring camera of claim 2, wherein the second region includes a plurality of sub-regions, and wherein when the first lens portion to which driving force is not applied is moved by the driving member, the FOI region move from the first region defined as an initial position to one sub-region selected from among the plurality of sub-regions of the second region.

4. The distance measuring camera of claim 3, wherein the plurality of sub-regions of the second region includes:

a 2-1 region;
a 2-2 region spaced apart from the 2-1 region in the first direction;
a 2-3 region spaced apart from the 2-1 region in the second direction; and
a 2-4 region spaced apart from the 2-2 region in the second direction and spaced apart from the 2-3 region in the first direction,
wherein each of the 2-1 to 2-4 regions is perpendicular to the optical axis with respect to the first region and is located in a third direction that is diagonal to the first and second directions.

5. The distance measuring camera of claim 4, wherein the first region based on in an optical axis direction partially overlaps the 2-1 region and the 2-4 region.

6. The distance measuring camera of claim 4, wherein the 2-1 to 2-4 regions based on an optical axis direction do not overlap with each other.

7. The distance measuring camera of claim 4, wherein the 2-1 and 2-3 regions, and the 2-2 and 2-4 regions partially overlap each other in an optical axis direction, and the 2-1 and 2-2 regions, and the 2-3 and 2-4 regions do not partially overlap each other.

8. The distance measuring camera of claim 4, wherein when a driving force of the driving member is not applied, a field of illumination (FOI) angle of output light emitted from the light source satisfies Equation 1 below:

[Equation 1]

$$FOI = 2 \times \tan^{-1} \frac{\frac{D}{2}}{EFL}$$

(In Equation 1, FOI means a total FOI angle of the output light in an initial state in which the driving force of the driving member is not applied, and D means a diagonal length of the effective region of the light source.).

9. The distance measuring camera of claim 8, wherein the FOI angle of the output light is 60 degrees or less.

10. The distance measuring camera of claim 4, wherein when the first lens portion moves in the first direction, a moving distance of the first lens portion in the first direction satisfies Equation 2 below:

[Equation 2]

$$S1 < (\tan 50^\circ \times EFL) - \frac{dx}{2}$$

(In Equation 2, S 1 denotes a moving distance of the first lens portion moving in the first direction with respect to the optical axis, and EFL denotes an effective focal length of the first lens portion. In addition, dx is the It means the length in the first direction.).

11. The distance measuring camera of claim 10, wherein when the first lens portion moves in the second direction, a movement distance of the first lens portion in the second direction satisfies Equation 3 below:

[Equation 3]

$$S2 < (\tan 50^\circ \times EFL) - \frac{dy}{2}$$

(In Equation 3, S2 means a movement distance of the first lens portion moving in the second direction with respect to the optical axis, and EFL means an effective focal length of the first lens portion. In addition, dx means a length of the light source in the first direction.).

12. The distance measuring camera of claim 11, wherein when the first lens portion moves in at least one of the first and second directions, a total FOI angle of output light emitted from the light source satisfies Equation 4 below:

[Equation 4]

$$FOI_S = 2 \times \tan^{-1} \sqrt{(\tan \frac{FOI_X}{2})^2 + (\tan \frac{FOI_Y}{2})^2}$$

(In Equation 4, FOIs means the total FOI angle of the distance measuring camera changed by the movement of the first lens portion. Also, FOIx means the FOI angle in the first direction, and FOI$_Y$ means the FOI angle in the second direction.).

FIG. 1

1000

Light emitting portion —100

Receving emitting portion —300

FIG. 2

100

300

110— Light source

130— First lens portion

150— Driving member

Image sensor —310

Second lens portion —330

FIG. 3

FIG. 4

(a)                    (b)

FIG. 5

FIG. 6

(a)                    (b)

FIG. 7

FIG. 8

(a)

(b)

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

# EP 4 191 285 A1

<table>
<tr><td colspan="2" style="text-align:center">INTERNATIONAL SEARCH REPORT</td><td colspan="2">International application No.<br><br>**PCT/KR2021/009913**</td></tr>
</table>

**A. CLASSIFICATION OF SUBJECT MATTER**

G01S 17/89(2006.01)i; H04N 5/225(2006.01)i; G01S 7/51(2006.01)i

According to International Patent Classification (IPC) or to both national classification and IPC

**B. FIELDS SEARCHED**

Minimum documentation searched (classification system followed by classification symbols)

G01S 17/89(2006.01); G01B 11/25(2006.01); G01C 3/08(2006.01); G01S 17/02(2006.01); G01S 17/93(2006.01); G02B 5/20(2006.01); G02B 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 레이저(laser), 패턴(pattern), 렌즈(lens), 구동(actuator), 중첩(overlap)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2015-0087612 A (LG ELECTRONICS INC.) 30 July 2015 (2015-07-30)<br>See paragraphs [0004]-[0006], [0029]-[0035], [0051]-[0059], [0102]-[0103] and [0118]-[0126]; claim 1; and figures 1 and 5-6c. | 1-7 |
| A | | 8-12 |
| Y | KR 10-2019-0049871 A (INNOVIZ TECHNOLOGIES LTD.) 09 May 2019 (2019-05-09)<br>See paragraphs [0442]-[0445]; and figure 27. | 1-7 |
| A | KR 10-2020-0085099 A (LG INNOTEK CO., LTD.) 14 July 2020 (2020-07-14)<br>See paragraphs [0032]-[0166]; claims 1-12; and figures 1-15b. | 1-12 |
| A | KR 10-2015-0004743 A (ELECTRONICS AND TELECOMMUNICATIONS RESEARCH INSTITUTE) 13 January 2015 (2015-01-13)<br>See paragraphs [0023]-[0124]; claims 1-28; and figures 1-22. | 1-12 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 November 2021** | **09 November 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

### INTERNATIONAL SEARCH REPORT

| International application No. |
| --- |
| **PCT/KR2021/009913** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2012-0287417 A1 (MIMEAULT, Yvan) 15 November 2012 (2012-11-15)<br>    See paragraphs [0048]-[0080]; claims 1-23; and figures 1-4. | 1-12 |

Form PCT/ISA/210 (second sheet) (July 2019)

### INTERNATIONAL SEARCH REPORT
Information on patent family members

International application No.

**PCT/KR2021/009913**

| Patent document cited in search report | | | Publication date (day/month/year) | Patent family member(s) | | | Publication date (day/month/year) |
|---|---|---|---|---|---|---|---|
| KR | 10-2015-0087612 | A | 30 July 2015 | KR | 10-2103722 | B1 | 23 April 2020 |
| KR | 10-2019-0049871 | A | 09 May 2019 | CN | 109997057 | A | 09 July 2019 |
| | | | | CN | 109997057 | B | 14 July 2020 |
| | | | | CN | 110268283 | A | 20 September 2019 |
| | | | | CN | 110286388 | A | 27 September 2019 |
| | | | | CN | 110286388 | B | 03 November 2020 |
| | | | | CN | 110402399 | A | 01 November 2019 |
| | | | | CN | 111615646 | A | 01 September 2020 |
| | | | | CN | 111796255 | A | 20 October 2020 |
| | | | | CN | 112236685 | A | 15 January 2021 |
| | | | | CN | 112969937 | A | 15 June 2021 |
| | | | | EP | 3516421 | A2 | 31 July 2019 |
| | | | | EP | 3542184 | A1 | 25 September 2019 |
| | | | | EP | 3566078 | A1 | 13 November 2019 |
| | | | | EP | 3688492 | A1 | 05 August 2020 |
| | | | | EP | 3737970 | A2 | 18 November 2020 |
| | | | | EP | 3775983 | A1 | 17 February 2021 |
| | | | | EP | 3859396 | A1 | 04 August 2021 |
| | | | | EP | 3867668 | A2 | 25 August 2021 |
| | | | | JP | 2019-535014 | A | 05 December 2019 |
| | | | | JP | 2020-126065 | A | 20 August 2020 |
| | | | | JP | 2020-504291 | A | 06 February 2020 |
| | | | | JP | 6697636 | B2 | 20 May 2020 |
| | | | | KR | 10-2021-0089172 | A | 15 July 2021 |
| | | | | US | 10031214 | B2 | 24 July 2018 |
| | | | | US | 10031232 | B2 | 24 July 2018 |
| | | | | US | 10107915 | B2 | 23 October 2018 |
| | | | | US | 10191156 | B2 | 29 January 2019 |
| | | | | US | 10215859 | B2 | 26 February 2019 |
| | | | | US | 10222477 | B2 | 05 March 2019 |
| | | | | US | 10241207 | B2 | 26 March 2019 |
| | | | | US | 10241208 | B2 | 26 March 2019 |
| | | | | US | 10281582 | B2 | 07 May 2019 |
| | | | | US | 10310088 | B2 | 04 June 2019 |
| | | | | US | 10317534 | B2 | 11 June 2019 |
| | | | | US | 10353075 | B2 | 16 July 2019 |
| | | | | US | 10481268 | B2 | 19 November 2019 |
| | | | | US | 10698114 | B2 | 30 June 2020 |
| | | | | US | 10776639 | B2 | 15 September 2020 |
| | | | | US | 10915765 | B2 | 09 February 2021 |
| | | | | US | 2018-0081037 | A1 | 22 March 2018 |
| | | | | US | 2018-0081038 | A1 | 22 March 2018 |
| | | | | US | 2018-0100928 | A1 | 12 April 2018 |
| | | | | US | 2018-0113200 | A1 | 26 April 2018 |
| | | | | US | 2018-0113216 | A1 | 26 April 2018 |
| | | | | US | 2018-0120424 | A1 | 03 May 2018 |
| | | | | US | 2018-0120441 | A1 | 03 May 2018 |
| | | | | US | 2018-0128920 | A1 | 10 May 2018 |
| | | | | US | 2018-0136331 | A1 | 17 May 2018 |
| | | | | US | 2018-0136337 | A1 | 17 May 2018 |

Form PCT/ISA/210 (patent family annex) (July 2019)

**INTERNATIONAL SEARCH REPORT**
Information on patent family members

International application No.

**PCT/KR2021/009913**

| Patent document cited in search report | | | Publication date (day/month/year) | Patent family member(s) | | | Publication date (day/month/year) |
|---|---|---|---|---|---|---|---|
| | | | | US | 2018-0143302 | A1 | 24 May 2018 |
| | | | | US | 2018-0143304 | A1 | 24 May 2018 |
| | | | | US | 2018-0143305 | A1 | 24 May 2018 |
| | | | | US | 2018-0143306 | A1 | 24 May 2018 |
| | | | | US | 2018-0143307 | A1 | 24 May 2018 |
| | | | | US | 2018-0143308 | A1 | 24 May 2018 |
| | | | | US | 2018-0143322 | A1 | 24 May 2018 |
| | | | | US | 2018-0143324 | A1 | 24 May 2018 |
| | | | | US | 2019-0212450 | A1 | 11 July 2019 |
| | | | | US | 2019-0271767 | A1 | 05 September 2019 |
| | | | | US | 2019-0271769 | A1 | 05 September 2019 |
| | | | | US | 2019-0317217 | A1 | 17 October 2019 |
| | | | | US | 2019-0318177 | A1 | 17 October 2019 |
| | | | | US | 2019-0324147 | A1 | 24 October 2019 |
| | | | | US | 2020-0249324 | A1 | 06 August 2020 |
| | | | | US | 2020-0249349 | A1 | 06 August 2020 |
| | | | | US | 2020-0249354 | A1 | 06 August 2020 |
| | | | | US | 2020-0292679 | A1 | 17 September 2020 |
| | | | | US | 2020-0292709 | A1 | 17 September 2020 |
| | | | | US | 2020-0386872 | A1 | 10 December 2020 |
| | | | | US | 2020-0393545 | A1 | 17 December 2020 |
| | | | | US | 2021-0025997 | A1 | 28 January 2021 |
| | | | | WO | 2018-055449 | A2 | 29 March 2018 |
| | | | | WO | 2018-055513 | A2 | 29 March 2018 |
| | | | | WO | 2018-055513 | A3 | 11 May 2018 |
| | | | | WO | 2018-091970 | A1 | 24 May 2018 |
| | | | | WO | 2018-127789 | A1 | 12 July 2018 |
| | | | | WO | 2019-064062 | A1 | 04 April 2019 |
| | | | | WO | 2019-106429 | A2 | 06 June 2019 |
| | | | | WO | 2019-106429 | A3 | 18 July 2019 |
| | | | | WO | 2019-197894 | A1 | 17 October 2019 |
| | | | | WO | 2020-148567 | A2 | 23 July 2020 |
| | | | | WO | 2020-148567 | A3 | 01 October 2020 |
| KR | 10-2020-0085099 | A | 14 July 2020 | CN | 113260892 | A | 13 August 2021 |
| | | | | WO | 2020-141827 | A1 | 09 July 2020 |
| KR | 10-2015-0004743 | A | 13 January 2015 | KR | 10-2140307 | B1 | 03 August 2020 |
| | | | | US | 2015-0009485 | A1 | 08 January 2015 |
| | | | | US | 9857472 | B2 | 02 January 2018 |
| US | 2012-0287417 | A1 | 15 November 2012 | CN | 103502841 | A | 08 January 2014 |
| | | | | CN | 103502841 | B | 23 September 2015 |
| | | | | EP | 2707748 | A2 | 19 March 2014 |
| | | | | EP | 2707748 | A4 | 08 October 2014 |
| | | | | EP | 2707748 | B1 | 20 September 2017 |
| | | | | JP | 2014-517921 | A | 24 July 2014 |
| | | | | JP | 2018-119986 | A | 02 August 2018 |
| | | | | US | 8908159 | B2 | 09 December 2014 |
| | | | | WO | 2012-153309 | A2 | 15 November 2012 |
| | | | | WO | 2012-153309 | A3 | 14 March 2013 |

Form PCT/ISA/210 (patent family annex) (July 2019)